# EUROPÄISCHE PATENTSCHRIFT

(11) **EP 4 105 805 B1**
(45) Veröffentlichungstag und Bekanntmachung des Hinweises auf die Patenterteilung: **17.04.2024**
(21) Anmeldenummer: 21179494.6
(22) Anmeldetag: 15.06.2021
(51) Int. Cl.: G06F 21/60, H04N 1/44, H04L 9/40, G06F 21/62, H04N 1/32

(54) **VERFAHREN ZUM BETREIBEN EINES SCANSYSTEMS**
METHOD FOR OPERATING A SCAN SYSTEM
PROCÉDÉ DE FONCTIONNEMENT D'UN SYSTÈME DE BALAYAGE

(43) Veröffentlichungstag der Anmeldung: 21.12.2022
(73) Patentinhaber: Genius Bytes Software Solutions GmbH, 44801 Bochum (DE)
(72) Erfinder: Horst, Matthias, 44801 Bochum (DE)
(74) Vertreter: Cohausz & Florack

(56) Entgegenhaltungen:
- EP-B1- 1 542 396
- US-A1- 2006 136 726
- US-A1- 2008 019 519

## Beschreibung

Die Anmeldung betrifft ein Verfahren zum (sicheren) Betreiben eines Scansystems. Darüber hinaus betrifft die Anmeldung eine Scanserveranordnung, eine Scanvorrichtung für ein Scansystem, eine Computervorrichtung für ein Scansystem, ein Scansystem und eine Scananwendung.

Aus dem Stand der Technik sind Verfahren zum Betreiben von Scansystemen und Scansysteme mit mindestens einer Scanvorrichtung bekannt, die von mindestens einer Computervorrichtung genutzt werden kann, um ein durch die Scanvorrichtung eingescanntes Dokument zu erhalten und weiterzuverarbeiten, also einen Scanauftrag.

So kann ein Scanauftrag durch die Scanvorrichtung in herkömmlicher Weise generiert werden. Der generierte Scanauftrag kann über ein drahtloses und/oder drahtgebundenes Kommunikationsnetz an die Computervorrichtung übertragen werden. Nach Erhalt des Scanauftrags kann die Computervorrichtung den Scanauftrag verarbeiten, beispielsweise das eingescannte Dokument oder dergleichen auf einer Anzeige bzw. Anzeigeneinrichtung der Computervorrichtung anzeigen.

In der Regel umfasst ein Scansystem mindestens eine Scanvorrichtung, mindestens eine Scanserveranordnung mit mindestens einer Scanserverkomponente und eine Vielzahl von Computervorrichtungen. Die genannten Elemente sind über ein drahtloses und/oder drahtgebundenes Kommunikationsnetz miteinander verbindbar.

Ein grundsätzliches Problem solcher Scansysteme besteht darin, dass von einer Scanvorrichtung eingescannte Dokumente häufig unverschlüsselt an die Computervorrichtung versendet werden, beispielsweise im Rahmen einer E-Mail oder dergleichen. Dies ermöglicht es, dass unberechtigte Dritte diese unverschlüsselte Kommunikation abhören können und somit unberechtigten Zugriff auf eingescannte Dokumente bzw. Scanaufträge erlangen können. Auch wird eine (Netzwerk-) Scanvorrichtung in der Regel von einer Vielzahl von Computervorrichtungen und/oder Nutzern genutzt. Zudem ist eine Scanvorrichtung von den Computervorrichtungen entfernt angeordnet.

Wird ein Scanauftrag (auch Scanjob genannt) durch eine Scanvorrichtung, die von einem ersten berechtigten Nutzer bedient wird, erzeugt, kann der erzeugte Scanauftrag, beispielsweise unter Zwischenschaltung einer Scanserveranordnung, an eine von dem Nutzer angegebene Computervorrichtung bzw. eine E-Mail-Adresse übertragen werden. Bei einer E-Mail-Adresse kann der Nutzer in herkömmlicher Weise sein E-Mail-Konto auf der Computervorrichtung aufrufen und auf das unverschlüsselte eingescannte Dokument zugreifen.

Um die Sicherheit bei derartigen Scansystemen zu erhöhen und insbesondere zu verhindern, dass unberechtigte Dritte Zugriff auf durch eine (Netzwerk-) Scanvorrichtung eingescannte Dokumente haben können, werden beim Stand der Technik nutzerbezogene Signaturkarten (auch Smartkarten genannt) verwendet. Insbesondere kann jedem Nutzer eine Signaturkarte mit einem geheimen Schlüssel eindeutig zugeordnet sein.

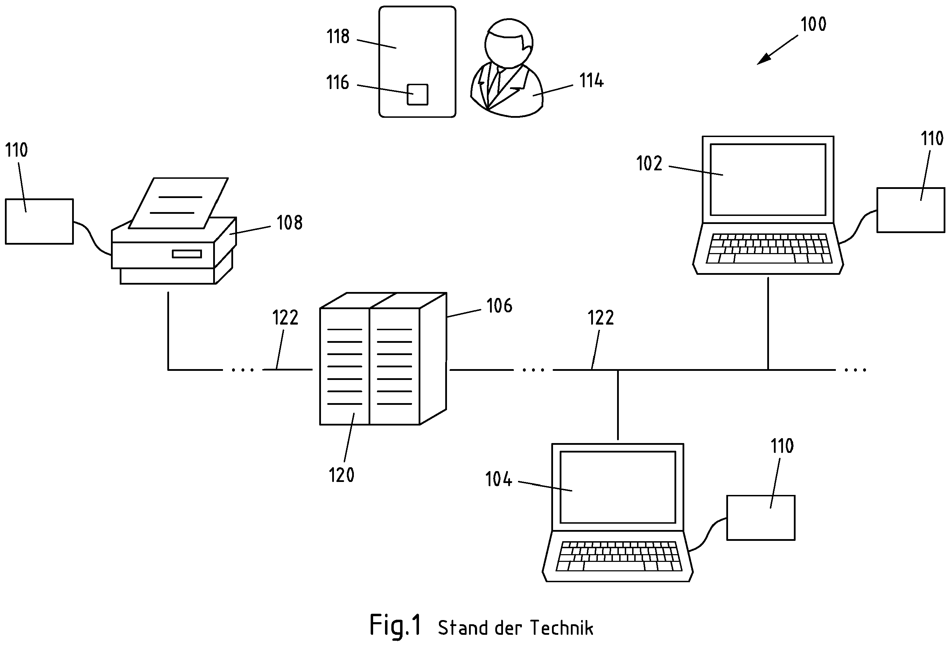

Ein derartiges Scansystem 100 gemäß dem Stand der Technik ist in der Figur 1 dargestellt. Das Scansystem 100 umfasst eine Mehrzahl von Computervorrichtungen 102, 104, die jeweils ein Kartenlesegerät 110 umfassen bzw. mit einem solchen Kartenlesegerät 110 verbunden sind.

Darüber hinaus umfasst das Scansystem 100 mindestens eine (Netzwerk-) Scanvorrichtung 108. Die Scanvorrichtung 108 weist in herkömmlicher Weise eine Scanfunktion auf. Wie ferner zu erkennen ist, ist auch die Scanvorrichtung 108 mit einem Kartenlesegerät 110 verbunden bzw. ausgestattet.

Um bei diesem System 100 einen Scanauftrag zu einer der Computervorrichtungen 102, 104 zu übertragen, kann ein Nutzer 114 zunächst in herkömmlicher Weise ein Dokument einscannen. Anschließend kann der Nutzer 114 seine Signaturkarte 118 in oder an das Kartenlesegerät 110 der Scanvorrichtung 108 einführen bzw. halten. Die Signaturkarte verfügt über ein Speichermittel 116. In diesem Speichermittel ist der private bzw. geheime Schlüssel des Nutzers 114 gespeichert.

Dann wird der Scanauftrag, enthaltend das eingescannte Dokument bzw. die entsprechenden Scandaten, mit dem geheimen Schlüssel (auch privater Schlüssel genannt) des Nutzers 114 verschlüsselt. Insbesondere kann der Schlüssel von dem Kartenlesegerät 110 bzw. der Scanvorrichtung 108 zum Verschlüsseln verwendet werden.

Der mit dem Schlüssel verschlüsselte Scanauftrag wird dann über ein drahtloses und/oder drahtgebundenes Kommunikationsnetz 122 an die Scanserveranordnung 106 des Scansystems 100 gesendet und in einem Datenspeicher 120 der Scanserveranordnung 106 abgespeichert.

Um das Dokument in sicherer Weise an einer Computervorrichtung 102, 104 zu erhalten, kann der verschlüsselte Scanauftrag von die Scanserveranordnung an die Computervorrichtung 102, 104 übertragen werden. Der Nutzer 114 hält seine Signaturkarte in oder an das Kartenlesegerät 110 der Computervorrichtung 102, 104. Der verschlüsselte Scanauftrag wird dann mit dem an der Computervorrichtung 102, 104 durch das Kartenlesegerät 110 erfassten geheimen Schlüssel des Nutzers entschlüsselt. Das entschlüsselte Dokument wird dann beispielsweise durch eine Anzeige der Computervorrichtung 102, 104 angezeigt oder kann in anderer Weise weiterverarbeitet werden.

Ein solches Scansystem hat zwar den Vorteil, dass ein Zugriff auf das verschlüsselte Dokument durch einen unberechtigten Dritten, der nicht im Besitz des geheimen Schlüssels des Nutzers ist, erschwert werden kann. Jedoch hat das beschriebene Stand der Technik Scansystem die Nachteile, dass zusätzliche Hardware erforderlich ist. Neben der Vielzahl von Kartenlesegeräten, mit der jedes Gerät ausgestattet werden muss, muss jeder Nutzer über eine eigene Signaturkarte verfügen.

Zudem ist der Betrieb eines solchen Scansystems mit einem hohen Aufwand verbunden, da beispielsweise die Zertifikate der Signaturkarten regelmäßig aktualisiert werden müssen. Es müssen Sperrlisten gepflegt werden, um zu verhindern, dass gesperrte Signaturkarten (die beispielsweise von einem Nutzer verloren worden sind) weiterhin einsetzbar sind.

Ferner wird die Sicherheit zwar verbessert. Jedoch ist das Sicherheitslevel des Scansystems vergleichsweise gering, da der verwendete geheime Schlüssel lediglich personenbezogen bzw. nutzerbezogen ist. Wenn der Schlüssel einem unberechtigten Dritten bekannt wird, kann dieser die übertragenen verschlüsselten Scanaufträge unberechtigt einsehen.

Darüber hinaus sind aus den Druckschriften US 2006/136726 A1, US 2008/019519 A1 und EP 1 542 396 B1 Verfahren zum Betreiben eines Scansystems bekannt.

Daher liegt der vorliegenden Anmeldung die Aufgabe zugrunde, ein Verfahren zum Betreiben eines Scansystems bereitzustellen, welches in einfacher Weise und gleichzeitig sicherer Weise ein Scannen von Scanaufträgen an einer Scanvorrichtung des Scansystems sowie eine sichere Übertragung der Scanaufträge an eine Computervorrichtung ermöglicht.

Die Aufgabe wird gemäß einem ersten Aspekt gelöst durch ein Verfahren gemäß Anspruch 1. Das Verfahren zum Betreiben eines Scansystems mit mindestens einer Scanserveranordnung und mindestens einer mit der Scanserveranordnung kommunikativ verbindbaren Scanvorrichtung umfasst:
- Erhalten, durch die Scanserveranordnung, eines mit einem öffentlichen Scanauftragsschlüssel eines Scanauftragsschlüsselpaares verschlüsselten Scanauftrags von einer mit der Scanserveranordnung kommunikativ verbindbaren Scanvorrichtung,
- Erhalten, durch die Scanserveranordnung, eines mit einem öffentlichen Computervorrichtungsschlüssel eines Computervorrichtungsschlüsselpaares verschlüsselten privaten Scanauftragsschlüssels des Scanauftragsschlüsselpaares von einem mobilen Nutzerendgerät,
- wobei das Computervorrichtungsschlüsselpaar der Computervorrichtung zugeordnet ist,
- Übertragen, durch die Scanserveranordnung, des erhaltenen verschlüsselten privaten Scanauftragsschlüssels an die Computervorrichtung, und
- Übertragen, durch die Scanserveranordnung, des erhaltenen verschlüsselten Scanauftrags an die Computervorrichtung zum Weiterverarbeiten des Scanauftrags durch die Computervorrichtung.

Indem im Gegensatz zum Stand der Technik anmeldungsgemäß zwei (asynchrone) Schlüsselpaare und insbesondere ein (in der Regel ohnehin vorgesehenes) mobiles Nutzerendgerät (eines berechtigten Nutzers) verwendet werden, kann in einfacher Weise und gleichzeitig sicherer Weise das Scannen von Scanaufträgen an einer Scanvorrichtung des Scansystems und insbesondere ein sicheres Übertragen des Scanauftrags erfolgen. Der Einsatz von Kartenlesegeräten und Signaturkarten kann entfallen und damit der Aufwand für ein solches Sicherheitssystem.

Das Verfahren dient dem Betreiben eines Scansystems, zumindest einer Scanserveranordnung eines Scansystems. Ein Scansystem umfasst mindestens eine Scanserveranordnung und mindestens eine mit der Scanserveranordnung kommunikativ verbindbare Scanvorrichtung.

Vorzugsweise kann die Scanserveranordnung über mindestens ein Kommunikationsnetz mit der Scanvorrichtung kommunikativ verbindbar sein. Das drahtlose und/oder drahtgebundene Kommunikationsnetz kann mindestens ein Netzwerk umfassen, wie beispielsweise ein Local Area Network (LAN), ein Wireless LAN (WLAN), ein Wide Area Network (WAN) und/oder dergleichen.

Die mindestens eine Scanvorrichtung des Scansystems ist vorzugsweise ein Netzwerkscanner. Ein Netzwerkscanner kann eine Anzeige zum Beispiel in Form eines Displays aufweisen. Ein Netzwerkscanner kann einen Prozessor, Speichermittel, Schnittstellen, etc. umfassen. Eine anmeldungsgemäße Scanvorrichtung umfasst zumindest eine Scanfunktion, beispielsweise in Form eines Scanmoduls. Weitere Funktionen, wie eine Druck-Funktion und/oder eine Fax-Funktion, können implementiert sein.

Eine Scanserveranordnung kann durch mindestens eine Rechenvorrichtung mit Serverfunktionalität gebildet sein und insbesondere einen Prozessor, Speichermittel, Schnittstellen, etc. umfassen.

Die Scanserveranordnung kann durch eine einzelne Scanserverkomponente gebildet sein. Diese Scanserverkomponente kann in der Scanvorrichtung oder der Computervorrichtung oder einer zusätzlichen (zentralen) Rechenvorrichtung implementiert sein.

Alternativ kann die Scanserveranordnung durch zwei verteilt angeordnete Scanserverkomponenten gebildet sein kann. Insbesondere kann eine erste Scanserverkomponente angeordnet sein, eingerichtet zum Erhalten des mit einem öffentlichen Scanauftragsschlüssel eines Scanauftragsschlüsselpaares verschlüsselten Scanauftrags von einer mit der Scanserveranordnung kommunikativ verbindbaren Scanvorrichtung. Die erste Scanserverkomponente kann zum Übertragen des erhaltenen verschlüsselten Scanauftrags an die Computervorrichtung zum Weiterverarbeiten des Scanauftrags durch die Computervorrichtung eingerichtet sein. Die erste Scanserverkomponente kann in der Scanvorrichtung oder der Computervorrichtung oder einer zusätzlichen Rechenvorrichtung implementiert sein. Insbesondere kann die erste Scanserverkomponente sämtliche Schritte (z.B. Erhalten, Speichern, Senden bzw. Bereitstellen etc.) durchführen bzw. Steuern, die den Scanauftrag betreffen. Beispielsweise kann die erste Scanserverkomponente ein E-Mailserver oder dergleichen sein.

Eine zweite (insbesondere entfernt von der ersten Scanserverkomponente) angeordnete Scanserverkomponente kann eingerichtet sein zum Erhalten eines mit einem öffentlichen Computervorrichtungsschlüssel eines Computervorrichtungsschlüsselpaares verschlüsselten privaten Scanauftragsschlüssels des Scanauftragsschlüsselpaares von einem mobilen Nutzerendgerät. Die zweite Scanserverkomponente kann zum Übertragen des erhaltenen verschlüsselten privaten Scanauftragsschlüssels an die Computervorrichtung eingerichtet sein. Die zweite Scanserverkomponente kann in der Scanvorrichtung oder der Computervorrichtung oder einer zusätzlichen Rechenvorrichtung implementiert sein. Insbesondere kann die zweite Scanserverkomponente sämtliche Schritte (z.B. Erhalten, Senden bzw. Bereitstellen etc.) durchführen bzw. steuern, die den verschlüsselten privaten Scanauftragsschlüssel betreffen.

Mit dem Scansystem kann mindestens eine Computervorrichtung verbindbar sein, insbesondere in Form eines (stationären) Arbeitsplatzrechners bzw. Computers. Bei einer Ausführungsform kann das Scansystem die mindestens eine Computervorrichtung umfassen.

Gemäß dem anmeldungsgemäßen Verfahren erhält die Scanserveranordnung, also beispielsweise die erste Scanserverkomponente, einen verschlüsselten Scanauftrag bzw. Scanjob. Der Scanauftrag kann insbesondere durch die mindestens eine mit dem Kommunikationsnetz verbindbare Scanvorrichtung generiert werden.

Zum Verschlüsseln des Scanauftrags bzw. der Scandaten wird vorgeschlagen, eine asynchrone Verschlüsselung (auch Public-Key-Verschlüsselungsverfahren genannt) zu verwenden. Bei einem derartigen kryptographischen Verfahren wird ein Schlüsselpaar bereitgestellt, das aus einem geheimen Teil (privater Schlüssel) und einem nicht geheimen Teil (öffentlicher Schlüssel) besteht. Grundsätzlich ermöglicht ein öffentlicher Schlüssel jedem, Daten für den Besitzer des privaten Schlüssels zu verschlüsseln. Der private Schlüssel ermöglicht es seinem Besitzer, mit dem öffentlichen Schlüssel verschlüsselte Daten zu entschlüsseln.

Anmeldungsgemäß ist ein Scanauftrag mit einem öffentlichen Scanauftragsschlüssel eines (asynchronen) Scanauftragsschlüsselpaares verschlüsselt. Dieser verschlüsselte Scanauftrag wird durch die Scanserveranordnung von der Scanvorrichtung empfangen. Die Scanvorrichtung hat den verschlüsselten Scanauftrag insbesondere ausgesendet.

Um ein sicheres Übertragen und insbesondere Weiterverarbeiten des Scanauftrags durch die Computervorrichtung zu ermöglichen, wird anmeldungsgemäß vorgeschlagen, den verschlüsselten Scanauftrag an die Computervorrichtung zu übertragen, um insbesondere ein Entschlüsseln des Scanauftrags (lokal) durch die Computervorrichtung zu ermöglichen. Hierzu ist es insbesondere erforderlich, den privaten Scanauftragsschlüssel des Scanauftragsschlüsselpaares ebenfalls der Computervorrichtung bereitzustellen.

Um den privaten Scanauftragsschlüssel in sicherer Weise an die Computervorrichtung zu übertragen, wird anmeldungsgemäß vorgeschlagen, diesen (ebenfalls) in verschlüsselter Form an die Computervorrichtung zu übertragen. Anmeldungsgemäß wird insbesondere vorgeschlagen, für die Verschlüsselung des privaten Scanauftragsschlüssels des Scanauftragsschlüsselpaares wiederum ein asynchrones Verschlüsselungsverfahren zu verwenden.

Gemäß der vorliegenden Anmeldung ist vorgesehen, dass die Scanserveranordnung, beispielsweise die zweite Scanserverkomponente, den mit einem öffentlichen Computervorrichtungsschlüssel eines (asynchronen) Computervorrichtungsschlüsselpaares verschlüsselten privaten Scanauftragsschlüssel des Scanauftragsschlüsselpaares von einem mobilen Nutzerendgerät (des berechtigten Nutzers) erhält. Das Computervorrichtungsschlüsselpaar ist anmeldungsgemäß (eindeutig) der zu verwendenden Computervorrichtung zugeordnet, also insbesondere der Computervorrichtung, an der der Scanauftrag zumindest initial weiterverarbeitet wird.

Wenn der verschlüsselte Scanauftrag beispielsweise durch eine E-Mail oder eine ähnliche Nachrichtenübermittlungsverfahren durch die Scanvorrichtung versendet wird, kann der Nutzer in herkömmlicher Weise auf sein E-Mailkonto (oder ein ähnliches Konto) zugreifen. Der verschlüsselte Scanauftrag kann dann (nur) durch diese bestimmte Computervorrichtung lokal entschlüsselbar sein, wie noch näher beschrieben wird.

Auch kann vorgesehen sein, dass das verschlüsselte Scanauftragsdokument automatisch aus dem E-Mail-Postfach bzw. -Konto heruntergeladen wird. So kann eine Applikation auf einer Computervorrichtung vorgesehen sein, die das E-Mail-Postfach bzw. -Konto nach entsprechenden E-Mail-Anhängen durchsucht.

Eine Zuordnung des Computervorrichtungsschlüsselpaars zu der zu verwendenden Computervorrichtung meint insbesondere, dass der öffentliche Computervorrichtungsschlüssel an dieser Computervorrichtung einem mobilen Nutzerendgerät bereitgestellt wird und der zugehörige private Computervorrichtungsschlüssel in der Computervorrichtung (in einer gesicherten Speicherumgebung) gespeichert ist. Ein Bereitstellen eines öffentlichen Computervorrichtungsschlüssels an der Computervorrichtung meint insbesondere, dass ein mobiles Nutzerendgerät diesen öffentlichen Computervorrichtungsschlüssel nur dann empfangen kann, wenn es sich (und damit sein Nutzer) in unmittelbarer (physischer) Nähe (z.B. zumindest näher als 5 m, vorzugsweise zumindest näher als 1 m, und/oder vorzugweise in dem Raum, in dem die Computervorrichtung angeordnet ist) zu der Computervorrichtung befindet.

In einem Datenspeicher des mobilen Nutzerendgeräts kann der private Scanauftragsschlüssel gespeichert sein. Dieser kann unter Nutzung des öffentlichen Computervorrichtungsschlüssels verschlüsselt werden. Der verschlüsselte private Scanauftragsschlüssel kann ausgesendet werden. Anders ausgedrückt, kann die Scanserveranordnung ein mit einem öffentlichen Computervorrichtungsschlüssel eines Computervorrichtungsschlüsselpaares verschlüsselten privaten Scanauftragsschlüssel des Scanauftragsschlüsselpaares von einem mobilen Nutzerendgerät erhalten bzw. empfangen.

Anmeldungsgemäß erfolgt ein Übertragen des verschlüsselten privaten Scanauftragsschlüssels und des verschlüsselten Scanauftrags, so dass der Computervorrichtung ein Entschlüsseln des Scanauftrags ermöglicht wird. Bei einer Variante der Anmeldung erfolgt zunächst die Übertragung des verschlüsselten privaten Scanauftragsschlüssels. Nach einer Entschlüsselung des verschlüsselten privaten Scanauftragsschlüssels lokal durch die Computervorrichtung kann der zugehörige verschlüsselte Scanauftrag angefordert werden. Als Antwort auf diese Aufforderung kann der zugehörige verschlüsselte Scanauftrag übertragen werden.

In besonders sicherer Weise kann ein Scannen eines Dokuments oder dergleichen sowie ein Übertragen des Scanauftrags an eine Computervorrichtung zur weiteren Verarbeitung ermöglicht werden. Es erfolgt anmeldungsgemäß sowohl eine scanauftragsspezifische als auch computervorrichtungsspezifische Verschlüsselung. Die Sicherheit wird hierdurch im Vergleich zum Stand der Technik erhöht. Der Scanauftrag wird insbesondere unmittelbar nach Generierung verschlüsselt und erst an der Computervorrichtung lokal entschlüsselt, an der der Scanauftrag weiterverarbeitet wird.

Wie bereits beschrieben wurde, kann die Scanserveranordnung zumindest teilweise in der Scanvorrichtung und/oder Computervorrichtung integriert sein. Kommunikativ verbindbar meint in diesem Fall insbesondere eine interne (drahtloses oder drahtgebundene) Kommunikationsverbindung zwischen Scanserveranordnung, insbesondere -komponente, und Scanvorrichtung bzw. Computervorrichtung.

Insbesondere kann es vorteilhaft sein, die Scanserveranordnung in einer Scanvorrichtung zu integrieren. So ist von Vorteil, dass der verschlüsselte Scanauftrag in dem Datenspeicher der Scanvorrichtung verbleibt. Bei einer Vielzahl von Scanvorrichtungen, jeweils mit einer zumindest teilweise integrierten Scanserveranordnung, kann vorgesehen sein, dass die Computervorrichtung jede Scanvorrichtung (bzw. Netzwerkkopierer) anpollt, um den Scanauftrag zu erhalten bzw. festzustellen, wo sich der Scanauftrag befindet. Bei einer sehr großen Anzahl von Scanvorrichtungen (z.B. > 100, insbesondere > 1000) kann ein zusätzlicher Informationsserver vorgesehen sein, der nur die Information speichert, wo sich ein Scanauftrag befindet. Dieser kann dann von einer Computervorrichtung angefragt werden.

Gemäß einer weiteren Ausführungsform des anmeldungsgemäßen Verfahrens kann der private Computervorrichtungsschlüssel des Computervorrichtungsschlüsselpaares in einem Datenspeicher der Computervorrichtung gespeichert sein. Das Verfahren kann umfassen:
- Entschlüsseln, durch die Computervorrichtung, des erhaltenen verschlüsselten privaten Scanauftragsschlüssels mit dem gespeicherten privaten Computervorrichtungsschlüssel des Computervorrichtungsschlüsselpaares, und insbesondere
- Entschlüsseln, durch die Computervorrichtung, des erhaltenen verschlüsselten Scanauftrags mit dem entschlüsselten privaten Scanauftragsschlüssel.

Anders ausgedrückt, entschlüsselt die Computervorrichtung (insbesondere ein entsprechend eingerichtetes Entschlüsselungsmodul der Computervorrichtung) zunächst den mit dem öffentlichen Computervorrichtungsschlüssel des Computervorrichtungsschlüsselpaares verschlüsselten privaten Scanauftragsschlüssel unter Nutzung des privaten Computervorrichtungsschlüssels von diesem Computervorrichtungsschlüsselpaar. Der private Computervorrichtungsschlüssel kann insbesondere in einem (gesicherten) Datenspeicher der Computervorrichtung gespeichert sein.

Anschließend (beispielsweise nachdem der zugehörige verschlüsselte Scanauftrag als Antwort auf eine entsprechende Anforderung erhalten wurde und/oder der Nutzer auf dieser Computervorrichtung auf sein E-Mailkonto oder dergleichen zugegriffen hat) kann die Computervorrichtung (insbesondere ein entsprechend eingerichtetes Entschlüsselungsmodul der Computervorrichtung) den mit dem öffentlichen Scanauftragsschlüssel des Scanauftragsschlüsselpaares verschlüsselten Scanauftrag unter Nutzung des entschlüsselten privaten Scanauftragsschlüssels von diesem Scanauftragsschlüsselpaar entschlüsseln.

Vorzugsweise kann nach einem Entschlüsseln, gemäß einer weiteren Ausführungsform des anmeldungsgemäßen Verfahrens, durch die Computervorrichtung ein Weiterverarbeiten des entschlüsselten Scanauftrags erfolgen, wie ein Anzeigen des Dokuments, ein Ändern des Dokuments etc. Insbesondere kann ein Weiterverarbeiten unmittelbar nach einer (erfolgreichen) Entschlüsselung des Scanauftrags erfolgen.

Gemäß einer bevorzugten Ausführungsform des anmeldungsgemäßen Verfahrens kann das Verfahren umfassen:
- Bereitstellen (insbesondere Generieren), durch die Scanvorrichtung, des Scanauftragsschlüsselpaares, insbesondere bei einer Erstellung des Scanauftrags,
- Verschlüsseln des Scanauftrags mit dem öffentlichen Scanauftragsschlüssel des bereitgestellten Scanauftragsschlüsselpaares,
- Bewirken, durch die Scanvorrichtung, eines Übertragens des verschlüsselten Scanauftrags an die Scanserveranordnung (und/oder die Computervorrichtung), und
- Bereitstellen, durch die Scanvorrichtung, des privaten Scanauftragsschlüssels des bereitgestellten Scanauftragsschlüsselpaares an der Scanvorrichtung, derart, dass das mobile Nutzerendgerät den privaten Scanauftragsschlüssel (nur (unmittelbar) an der Scanvorrichtung) erhalten kann.

Ein Bereitstellen eines Scanauftragsschlüsselpaares kann insbesondere bei bzw. nach der (herkömmlichen) Erstellung eines Scanauftrags durch die Scanvorrichtung erfolgen. Beispielsweise kann ein Nutzer durch ein Betätigen einer Nutzerschnittstelle in herkömmlicher Weise ein Scannen eines Dokuments (z.B. Text, Bild etc.) bewirken. Dann kann die Scanvorrichtung (insbesondere ein entsprechend eingerichtetes Verschlüsselungsmodul der Scanvorrichtung) den Scanauftrag mit dem bereitgestellten öffentlichen Scanauftragsschlüssel verschlüsseln. Der verschlüsselte Scanauftrag kann an die Scanserveranordnung durch die Scanvorrichtung übertragen werden. Anders ausgedrückt, kann die Scanserveranordnung in zuvor beschriebener Weise den Scanauftrag von der Scanvorrichtung erhalten.

Um in einfacher und sicherer Weise ein Übertragen des privaten Scanauftragsschlüssels zu ermöglichen, kann dieser durch die Scanvorrichtung, insbesondere an der Scanvorrichtung, dem mobilen Nutzerendgerät bereitgestellt werden, so dass dieses den privaten Scanauftragsschlüssel (nur) an der Scanvorrichtung empfangen kann. Ein Bereitstellen eines privaten Scanauftragsschlüssels an der Scanvorrichtung meint insbesondere, dass ein mobiles Nutzerendgerät diesen privaten Scanauftragsschlüssel nur dann empfangen kann, wenn es sich in unmittelbarer (physischer) Nähe (z.B. zumindest näher als 5 m, vorzugsweise zumindest näher als 1 m; vorzugsweise in dem gleichen Raum wie die Scanvorrichtung) zu der Scanvorrichtung befindet.

Insbesondere kann der Nutzer, der den Scanauftrag an der Scanvorrichtung erstellt hat, über das mobile Nutzerendgerät verfügen. Anders ausgedrückt, kann das mobile Nutzerendgerät dem berechtigten Nutzer (eindeutig) zugeordnet sein. Grundsätzlich kann das Übertragen des privaten Scanauftragsschlüssels an das mobile Nutzerendgerät in beliebiger Weise erfolgen, so lange nur sichergestellt ist, dass sich das mobile Nutzerendgerät an der Scanvorrichtung befinden muss, um diesen zu empfangen. Hierdurch kann die Sicherheit noch weiter erhöht werden.

Gemäß einer besonders bevorzugten Ausführungsform des anmeldungsgemäßen Verfahrens kann das Bereitstellen, durch die Scanvorrichtung, des privaten Scanauftragsschlüssels des bereitgestellten Scanauftragsschlüsselpaares ein Anzeigen eines optischen Scanauftragscodes durch eine optische Anzeige (bzw. Bildschirm, beispielsweise ein Display) der Scanvorrichtung umfassen. Der optische Scanauftragscode kann vorzugsweise zumindest den privaten Scanauftragsschlüssel enthalten. Indem der private Scanauftragsschlüssel codiert angezeigt wird, kann die Sicherheit in einfacher Weise erhöht werden. Beispielsweise kann der optische Scanauftragscode ein Barcode sein, wie ein QR-Code, 2D-Barcode und/oder dergleichen.

Der optische Scanauftragscode kann durch ein optisches Erfassungsmodul des mobilen Nutzerendgeräts erfasst werden. Insbesondere kann das optische Erfassungsmodul eine Kamera (mit einem Bildauswertemodul) sein. Zur Erfassung des Scanauftragscodes ist es insbesondere erforderlich, dass sich das mobile Nutzerendgerät in der unmittelbaren Nähe (z.B. kleiner als 5 m, vorzugsweise kleiner als 1 m) zu der Scanvorrichtung befinden muss.

Vorzugsweise kann der private Scanauftragsschlüssel durch das mobile Nutzerendgerät aus dem Scanauftragscode extrahiert werden. Insbesondere kann der aus dem optischen Scanauftragscode extrahierte private Scanauftragsschlüssel in einem (sicheren) Datenspeicher des mobilen Nutzerendgeräts gespeichert werden. Beispielsweise kann der private Scanauftragsschlüssel verschlüsselt in dem Datenspeicher des mobilen Nutzerendgeräts gespeichert werden.

Alternativ oder zusätzlich kann der private Scanauftragsschlüssel über eine zwischen dem mobilen Nutzerendgerät und der Scanvorrichtung herstellbare Nahfeldkommunikationsverbindung übertragen werden. Nicht abschließende Beispiele sind RFID-Verbindung, eine NFC-Verbindung und eine Bluetooth-Verbindung. Bei noch anderen Varianten kann auch eine kabelgebundene Übertragung erfolgen.

Gemäß einer weiteren Ausführungsform des anmeldungsgemäßen Verfahrens kann der private Scanauftragsschlüssel des bereitgestellten Scanauftragsschlüsselpaares auf (bzw. in) der (und insbesondere durch die) Scanvorrichtung nach einem Erhalt des privaten Scanauftragsschlüssels durch das mobile Nutzerendgerät gelöscht werden. Indem der private Scanauftragsschlüssel gelöscht wird, wenn dieser auf dem mobilen Nutzerendgerät vorhanden ist, kann die Sicherheit noch weiter verbessert werden. Insbesondere kann vermieden werden, dass sich der Scanauftragsschlüssel an mehreren Orten gleichzeitig befindet. Nach einem Löschen auf der Scanvorrichtung kann dieser nicht mehr von unberechtigten Nutzern von der Scanvorrichtung erfasst werden.

Gemäß einer Ausführungsform des anmeldungsgemäßen Verfahrens kann das Löschen nach einem Erhalt durch das mobile Nutzerendgerät ein Löschen des privaten Scanauftragsschlüssels bei Ablauf einer vorgegebenen Zeitdauer nach dem Start des Anzeigens des optischen Scanauftragscodes erfolgen. Der Scanauftragscode kann insbesondere unmittelbar nach Erstellung des Scanauftrags angezeigt werden. Bei dieser Ausführungsform wird insbesondere angenommen, dass das mobile Nutzerendgerät den optischen Scanauftragscode innerhalb der vorgegebenen Zeitdauer (z.B. zwischen 5 s und 5 min, vorzugsweise zwischen 10 s und 30 s) erhalten hat, also insbesondere eingescannt hat. Ist dies nicht der Fall gewesen, kann es erforderlich sein, das Schlüsselpaar (und ggf. den Scanauftrag) neu zu generieren.

Alternativ oder zusätzlich kann das Löschen des privaten Scanauftragsschlüssels bei Erhalt einer Bestätigungsnachricht, durch die Scanvorrichtung, erfolgen. Die Bestätigungsnachricht kann den Erhalt des privaten Scanauftragsschlüssels durch das mobile Nutzerendgerät bestätigen. Beispielsweise kann das mobile Nutzerendgerät nach einer (erfolgreichen) Abspeicherung des erhaltenen privaten Scanauftragsschlüssels eine entsprechende Bestätigungsnachricht aussenden. Auch kann die Aussendung durch eine Nutzeraktion auf dem mobilen Nutzerendgerät erfolgen. So kann der Nutzer aktiv die erfolgreiche Erfassung bestätigen und eine Aussendung der Bestätigungsnachricht hierdurch auslösen.

Vorzugsweise kann auf dem mobilen Nutzerendgerät eine Scananwendung in Form eines installierbaren Computerprogramms (insbesondere eine sogenannte "App") vorgesehen sein, welches durch einen Prozessor des mobilen Nutzerendgeräts ausführbar ist bzw. ausgeführt wird. Die Scananwendung kann insbesondere die durch das mobile Nutzerendgerät durchführbaren Verfahrensschritte steuern, wie noch näher beschrieben werden wird.

Darüber hinaus kann der optische Scanauftragscode mindestens ein weiteres Scanauftragsdatum enthalten, insbesondere ausgewählt aus der Gruppe, umfassend:
- Scanauftragskennung (eindeutige Kennung, die für den Scanauftrag erzeugt wird),
- Computervorrichtungskennung (beispielsweise ein eindeutiger Code oder eine eindeutige (Netzwerk-) Adresse),
- E-Mail-Adresse oder dergleichen des Nutzers,
- Nutzerkennung (insbesondere des Nutzers des mobilen Nutzerendgeräts),
- Computervorrichtungskennung der Computervorrichtung (beispielsweise ein eindeutiger Code) und/oder eine eindeutige (Netzwerk-) Adresse der ausgewählten Computervorrichtung,
- Zeitdatum (beispielsweise ein Zeitstempel der Scanauftragsgenerierung).

Es versteht sich, dass zwei oder mehr der vorgenannten Scanauftragsdaten enthalten sein können. Mindestens eines dieser Scanauftragsdaten (auch können mehrere kombiniert werden) kann als Scankennung verwendet werden, wie noch näher beschrieben wird.

Um die Sicherheit noch weiter zu erhöhen, kann, gemäß einer weiteren Ausführungsform des anmeldungsgemäßen Verfahrens, das Bereitstellen des Scanauftragsschlüsselpaares ein Generieren eines neuen Scanauftragsschlüsselpaares für jeden (neu) erstellten Scanauftrag umfassen, also insbesondere für jedes eingescannte Dokument. Insbesondere kann die Scanvorrichtung (insbesondere ein entsprechend eingerichteter Schlüsselgenerator des Scanvorrichtung) für jeden erstellten Scanauftrag ein neues Scanauftragsschlüsselpaar generieren.

Bei anderen Varianten kann ein Schlüsselpaar eine zeitliche Gültigkeit (z.B. zwischen 1 h und 72 h) besitzen. Alternativ oder zusätzlich kann vorgesehen sein, dass ein Schlüsselpaar nur für eine bestimmte Anzahl an Scanaufträgen (z.B. zwischen 2 und 20 Scanaufträgen) gültig ist. Bei Ablauf der Gültigkeit kann ein neues Schlüsselpaar generiert werden.

Bei weiteren Varianten kann der Schlüsselgenerator in einer weiteren Rechenvorrichtung des Scansystems implementiert sein und ein generiertes Schlüsselpaar an die Scanvorrichtung übertragen (beispielsweise über eine verschlüsselte Kommunikationsverbindung auf eine Aufforderung durch die Scanvorrichtung).

Wie bereits beschrieben wurde, kann, gemäß einer bevorzugten Ausführungsform des anmeldungsgemäßen Verfahrens, das Verfahren umfassen:
- Bereitstellen, durch die Computervorrichtung, des öffentlichen Computervorrichtungsschlüssels des bereitgestellten Computervorrichtungsschlüsselpaares, derart, dass das mobile Nutzerendgerät den öffentlichen Computervorrichtungsschlüssels (nur) an der Computervorrichtung erhalten kann, und
- Speichern des privaten Computervorrichtungsschlüssels des bereitgestellten Computervorrichtungsschlüsselpaares in einem (sicheren) Datenspeicher der Computervorrichtung.

Gemäß einer weiteren Ausführungsform des anmeldungsgemäßen Verfahrens kann das Bereitstellen, durch die Computervorrichtung, des öffentlichen Computervorrichtungsschlüssels des bereitgestellten Computervorrichtungsschlüsselpaares ein Anzeigen eines optischen Computervorrichtungscodes umfassen. Der optische Computervorrichtungscode kann den öffentlichen Computervorrichtungsschlüssel enthalten.

Der optische Computervorrichtungscode (vorzugsweise ein Barcode, wie ein QR- und/oder 2D- Barcode) kann durch ein optisches Erfassungsmodul des mobilen Nutzerendgeräts erfasst werden. Insbesondere kann das optische Erfassungsmodul eine Kamera (mit einem Bildauswertemodul) sein. Zur Erfassung des Computervorrichtungscodes ist es insbesondere erforderlich, dass sich das mobile Nutzerendgerät in der Nähe (kleiner als 5m, vorzugsweise kleiner als 1 m) zu der Computervorrichtung befinden muss.

Alternativ kann auch hier eine Nahfeldkommunikationsverbindung verwendet werden. Nicht abschließende Beispiele sind eine RFID-Verbindung, eine NFC-Verbindung und eine Bluetooth-Verbindung. Bei noch anderen Varianten kann auch eine kabelgebundene Übertragung erfolgen.

Der optische Computervorrichtungscode kann mindestens ein weiteres Computervorrichtungsdatum enthalten, wie beispielsweise eine Computervorrichtungskennung.

Gemäß einer weiteren Ausführungsform des anmeldungsgemäßen Verfahrens kann der öffentliche Computervorrichtungsschlüssel ein statischer bzw. permanent gültiger öffentlicher Computervorrichtungsschlüssel sein. Insbesondere kann der optische Computervorrichtungscode ein statischer bzw. permanent gültiger öffentlicher Computervorrichtungsschlüssel sein, beispielsweise in Form eines dauerhaft an einer (sichtbaren) Außenwand bzw. -seite der Computervorrichtung angebrachten Computervorrichtungscode (z.B. ein Barcode). Beispielsweise kann dieser Computervorrichtungscode aufgedruckt sein. Bei anderen Varianten der Anmeldung kann der Computervorrichtungscode auch durch die Anzeige bzw. den Bildschirm einer Computervorrichtung angezeigt werden.

Wie bereits beschrieben wurde, kann der optische Computervorrichtungscode durch ein optisches Erfassungsmodul des mobilen Nutzerendgeräts erfasst werden. Der gespeicherte private Scanauftragsschlüssel kann, gemäß einer weiteren bevorzugten Ausführungsform des anmeldungsgemäßen Verfahren, durch das mobile Nutzerendgerät, mit dem (in dem erfassten Computervorrichtungscode enthaltenen) öffentlichen Computervorrichtungsschlüssel verschlüsselt werden. Dies kann insbesondere unmittelbar nach der Erfassung des öffentlichen Computervorrichtungsschlüssels erfolgen.

Der verschlüsselte private Scanauftragsschlüssel kann, durch das mobile Nutzerendgerät, an die Scanserveranordnung (über das mindestens eine Kommunikationsnetz) übertragen werden. Vorzugsweise kann das Übertragen unmittelbar nach dem Verschlüsseln des privaten Scanauftragsschlüssels erfolgen. Das Übertragen kann insbesondere gleichzeitig eine Scananforderungsnachricht sein. Insbesondere kann durch die unmittelbare Durchführung der Verschlüsselung und Übertragung sichergestellt werden, dass sich der berechtigte Nutzer noch an der Computervorrichtung (tatsächlich) befindet, wenn der Scanauftrag von dieser weiterverarbeitet wird.

Gemäß einer weiteren bevorzugten Ausführungsform des anmeldungsgemäßen Verfahrens kann das Erhalten, durch die Scanserveranordnung, des verschlüsselten Scanauftrags ein Erhalten einer ersten Scankennung umfassen. Das Erhalten, durch die Scanserveranordnung, des verschlüsselten privaten Scanauftragsschlüssels kann ein Erhalten einer weiteren Scankennung umfassen. Das Übertragen des erhaltenen verschlüsselten Scanauftrags an die Computervorrichtung und des erhaltenen verschlüsselten privaten Scanauftragsschlüssel an die Computervorrichtung kann auf der ersten Scankennung und der weiteren Scankennung basieren. Die Scankennung kann insbesondere ein Datum sein, welches ein Zuordnen des Scanauftrags zu dem zugehörigen privaten Scanauftragsschlüssel in insbesondere eindeutiger Weise ermöglicht. Beispielsweise können die erste und die weitere Scankennung jeweils eine (systemweit eindeutige) Scanauftragskennung und/oder eine (systemweit eindeutige) Nutzerkennung und/oder ein (systemweit eindeutiges) Zeitdatum sein. Es versteht sich, dass auch andere Kennungen als Scankennungen verwendet werden können.

Die Scanvorrichtung kann die erste Scankennung zusammen mit dem verschlüsselten Scanauftrag versenden. Ferner kann die Scanvorrichtung die weitere Scankennung zusammen mit dem privaten Scanauftragsschlüssel dem mobilen Nutzerendgerät bereitstellen. Beispielsweise kann die weitere Scankennung bei der Generierung des Scanauftragscode in diesen Code integriert werden. Auch kann bei einer Nahfeldkommunikationsverbindung die weitere Scankennung mit übertragen werden.

Wie bereits beschrieben wurde, können die erste und die weitere Scankennung (die insbesondere identisch sind) ein Zuordnen zwischen dem Scanauftrag und dem zugehörigen verschlüsselten privaten Scanauftragsschlüssel ermöglichen.

Bei einer bevorzugten Variante der Anmeldung kann der verschlüsselte private Scanauftragsschlüssel mit der (vorzugsweise ebenfalls verschlüsselten) weiteren Scankennung zunächst an die Computervorrichtung gesendet werden. Dann kann (bei einer erfolgreichen Entschlüsselung) die (entschlüsselte) weitere Scankennung in Form einer Anforderungsnachricht an die Scanserveranordnung durch die Computervorrichtung gesendet werden. Als Antwort hierauf kann der zugehörige verschlüsselte Scanauftrag, bestimmbar durch die zugeordnete erste Scankennung, an die anfordernde Computervorrichtung durch die Scanserveranordnung gesendet werden.

Gemäß einer weiteren Ausführungsform des anmeldungsgemäßen Verfahrens kann das Verfahren umfassen
- Speichern, durch die Scanserveranordnung, des erhaltenen verschlüsselten Scanauftrags zusammen mit der erhaltenen ersten Scankennung in einem Datenspeicher der Scanserveranordnung.

Da in der Regel die Scanvorrichtung, die den Scanauftrag erstellt, von der Computervorrichtung entfernt angeordnet ist, kann der zunächst erhaltene Scanauftragsdatensatz, enthaltend zumindest die erste Scankennung und den verschlüsselten Scanauftrag, in einem (sicheren) Datenspeicher (beispielsweise verschlüsselt) gespeichert werden. Bei Empfang einer Scananforderungsnachricht von der Computervorrichtung, enthaltend insbesondere die weitere Scankennung, oder einer Scananforderungsnachricht von dem mobilen Nutzerendgerät, enthaltend insbesondere die weitere Scankennung und den verschlüsselten privaten Scanauftragsschlüssel, kann der gespeicherte Scanauftrag bestimmt und insbesondere an die Computervorrichtung weitergeleitet werden. Die Bestimmung kann insbesondere auf der Zuordnung zwischen erster und weiterer Kennung zu einem bestimmten Scanauftrag basieren.

Vorzugsweise kann das Verfahren ferner umfassen:
- Vergleichen, einer erhaltenen weiteren Scankennung mit der mindestens einen gespeicherten ersten Scankennung, und
- Übertragen, wenn in dem Vergleichsschritt eine Korrespondenz (insbesondere Identität) zwischen der erhaltenen weiteren Scankennung und einer gespeicherten ersten Scankennung bestimmt wird, des gespeicherten verschlüsselten Scanauftrags mit der zu der erhaltenen weiteren Scankennung korrespondierenden ersten Scankennung (und, wenn noch nicht erfolgt, des erhaltenen verschlüsselten privaten Scanauftragsschlüssel mit der weiteren Scankennung) an die Computervorrichtung.

Wenn keine Korrespondenz festgestellt wird, wird kein Scanauftrag übertragen. Bei Varianten der Anmeldung kann in diesem Fall eine (Standard-) Nachricht an das mobile Nutzerendgerät versendet werden, dass kein Scanauftrag bestimmt werden konnte.

Insbesondere bei Feststellung einer Identität zwischen der empfangenen weiteren Scankennung und einer bereits gespeicherten ersten Scankennung kann dies das Übertragen der entsprechenden Daten an die Computervorrichtung auslösen. Das Vergleichen und ggf. Übertragen kann insbesondere unmittelbar nach einem Erhalt der weiteren Kennung erfolgen.

Ein weiterer Aspekt der Erfindung ist eine Scanserveranordnunggemäß dem Anspruch 11. Die dteScanserveranordnung umfasst mindestens ein Empfangsmodul (insbesondere eine Kommunikationsschnittstelle zum Verbinden mit einem Kommunikationsnetz), eingerichtet zum Erhalten eines mit einem öffentlichen Scanauftragsschlüssel eines Scanauftragsschlüsselpaares verschlüsselten Scanauftrags von einer Scanvorrichtung. Das mindestens eine Empfangsmodul ist eingerichtet zum Erhalten eines mit einem öffentlichen Computervorrichtungsschlüssel eines Computervorrichtungsschlüsselpaares verschlüsselten privaten Scanauftragsschlüssels des Scanauftragsschlüsselpaares von einem mobilen Nutzerendgerät. Das Computervorrichtungsschlüsselpaar ist einer Computervorrichtung (eindeutig) zugeordnet (die zum Weiterverarbeiten des Scanauftrags verwendet wird). Die Scanserveranordnung umfasst mindestens ein Sendemodul (insbesondere eine Kommunikationsschnittstelle zum Verbinden mit einem Kommunikationsnetz) eingerichtet zum Übertragen des erhaltenen verschlüsselten Scanauftrags an die Computervorrichtung zum Weiterverarbeiten des Scanauftrags durch die Computervorrichtung. Das mindestens eine Sendemodul ist eingerichtet zum Übertragen des erhaltenen verschlüsselten privaten Scanauftragsschlüssels an die Computervorrichtung.

Die Scanserveranordnung kann insbesondere mit dem vorbeschriebenen Verfahren betrieben werden. Die Scanserveranordnung kann, wie beschrieben, ein Datenspeicher zum Speichern von Scanauftragsdatensätzen umfassen, enthaltend jeweils einen verschlüsselten Scanauftrag und insbesondere eine zugehörige erste Scankennung.

Ferner kann die Scanserveranordnung, gemäß einer weiteren Ausführungsform, ein Bestimmungsmodul umfassen, eingerichtet zum Vergleichen, einer erhaltenen weiteren Scankennung mit der mindestens einen gespeicherten Scankennung. Wenn eine Korrespondenz durch den Vergleich bestimmt wird, kann ein Übertragen der entsprechenden Daten erfolgen, wie bereits beschrieben wurde.

Wie bereits beschrieben wurde, kann die anmeldungsgemäße Scanserveranordnung durch eine einzelne (zentrale) Scanserverkomponente gebildet sein oder durch zwei verteilt angeordnete Scanserverkomponenten, wie einen E-Mailserver und eine Scanserverkomponente, eingerichtet zum Managen des verschlüsselten privaten Scanauftragsschlüssels bzw. die hiermit verknüpften Schritte.

Ein weiterer nicht-beanspruchter Gegenstand der Anmeldung ist eine Computervorrichtung für ein Scansystem. Die Computervorrichtung umfasst mindestens eine Schlüsselpaarbereitstellungseinrichtung, eingerichtet zum Bereitstellen eines Computervorrichtungsschlüsselpaares, enthaltend einen privaten Computervorrichtungsschlüssel und einen öffentlichen Computervorrichtungsschlüssel. Die Computervorrichtung umfasst mindestens einen Datenspeicher zum Speichern des privaten Computervorrichtungsschlüssels des bereitgestellten Computervorrichtungsschlüsselpaares. Die Schlüsselpaarbereitstellungseinrichtung ist eingerichtet zum Bereitstellen des öffentlichen Computervorrichtungsschlüssels des bereitgestellten Computervorrichtungsschlüsselpaares, derart, dass das mobile Nutzerendgerät den öffentlichen Computervorrichtungsschlüssel an der Computervorrichtung erhalten kann. Die Computervorrichtung umfasst mindestens ein Empfangsmodul (insbesondere eine Kommunikationsschnittstelle zum Verbinden mit einem Kommunikationsnetz), eingerichtet zum Erhalten eines mit einem öffentlichen Scanauftragsschlüssel eines Scanauftragsschlüsselpaares verschlüsselten Scanauftrags von einer Scanserveranordnung, insbesondere einer zuvor beschriebenen Scanserveranordnung. Das Empfangsmodul ist eingerichtet zum Erhalten eines mit dem bereitgestellten öffentlichen Computervorrichtungsschlüssel verschlüsselten privaten Scanauftragsschlüssels eines Scanauftragsschlüsselpaares von einem mobilen Nutzerendgerät (via der Scanserveranordnung). Die Computervorrichtung umfasst mindestens ein Entschlüsselungsmodul, eingerichtet zum (lokalen) Entschlüsseln des erhaltenen verschlüsselten privaten Scanauftragsschlüssels mit dem gespeicherten privaten Computervorrichtungsschlüssel des Computervorrichtungsschlüsselpaares. Das Entschlüsselungsmodul ist eingerichtet zum Entschlüsseln des erhaltenen verschlüsselten Scanauftrags mit dem entschlüsselten privaten Scanauftragsschlüssel.

Die Computervorrichtung kann insbesondere mit dem vorbeschriebenen Verfahren zumindest teilweise betrieben werden. Ein entsprechendes Verfahren ist insbesondere ein eigeständiger Aspekt der Anmeldung.

Ein weiterer Aspekt der Erfindung ist eine Scanvorrichtung gemäß dem Anspruch 12 für ein zuvor beschriebenes Scansystem. Die Scanvorrichtung umfasst mindestens ein Scanmodul, eingerichtet zum Erhalten (bzw. Erstellen) eines unverschlüsselten Scanauftrags. Die Scanvorrichtung umfasst mindestens ein Bereitstellungsmodul, eingerichtet zum Bereitstellen eines Scanauftragsschlüsselpaares für den unverschlüsselten Scanauftrag. Die Scanvorrichtung umfasst mindestens ein Verschlüsselungsmodul, eingerichtet zum Verschlüsseln des (unverschlüsselten) Scanauftrags mit dem öffentlichen Scanauftragsschlüssel des bereitgestellten Druckauftragsschlüsselpaares. Die Scanvorrichtung umfasst mindestens ein Sendemodul (insbesondere eine Kommunikationsschnittstelle zum Verbinden mit einem Kommunikationsnetz), eingerichtet zum Übertragen des verschlüsselten Scanauftrags an die Scanserveranordnung. Das Bereitstellungsmodul ist eingerichtet zum Bereitstellen des privaten Scanauftragsschlüssels des bereitgestellten Scanauftragsschlüsselpaares, derart, dass das mobile Nutzerendgerät den privaten Scanauftragsschlüssel an der Scanvorrichtung erhalten kann.

Die Scanvorrichtung kann insbesondere mit dem vorbeschriebenen Verfahren zumindest teilweise betrieben werden. Ein entsprechendes Verfahren ist insbesondere ein eigeständiger Aspekt der Anmeldung.

Ein weiterer Aspekt der Anmeldung ist ein Scansystem. Das Scansystem umfasst mindestens eine zuvor beschriebene Scanserveranordnung. Das Scansystem umfasst mindestens eine mit der Scanserveranordnung kommunikativ verbindbare Scanvorrichtung, insbesondere eine zuvor beschriebene Scanvorrichtung. Vorzugsweise kann das Scansystem mindestens ein mobiles Nutzerendgerät mit einer auf den Nutzerendgerät installierten Scananwendung umfassen. Ferner kann das Scansystem vorzugsweise mindestens eine zuvor beschriebene Computervorrichtung umfassen.

Es versteht sich, dass ein Scansystem zwei oder mehr Scanserveranordnungen und/oder zwei oder mehr Scanvorrichtungen und/oder zwei oder mehr mobile Nutzerendgeräte und/oder zwei oder mehr Computervorrichtungen umfassen kann.

Ein weiterer nicht-beanspruchter Aspekt der Anmeldung ist eine Scananwendung in Form eines auf einem mobilen Nutzerendgerät installierbaren Computerprogramms mit durch einen Prozessor des mobilen Nutzerendgeräts ausführbaren Computercode. Die Scananwendung umfasst mindestens ein Empfangsmodul, eingerichtet zum Erhalten eines von einer Scanvorrichtung bereitgestellten privaten Scanauftragsschlüssels eines Scanauftragsschlüsselpaares, wobei ein Scanauftrag mit einem öffentlichen Scanauftragsschlüssel des Scanauftragsschlüsselpaares durch die Scanvorrichtung verschlüsselbar ist. Die Scananwendung umfasst mindestens ein Speichermodul, eingerichtet zum Speichern des erhaltenen privaten Scanauftragsschlüssels in einem Datenspeicher des mobilen Nutzerendgeräts. Das Empfangsmodul ist eingerichtet zum Erhalten eines öffentlichen Computervorrichtungsschlüssels eines durch eine Computervorrichtung an der Computervorrichtung bereitgestellten Computervorrichtungsschlüsselpaares. Die Scananwendung umfasst mindestens ein Verschlüsselungsmodul, eingerichtet zum Verschlüsseln des gespeicherten privaten Scanauftragsschlüssels mit dem erhaltenen öffentlichen Computervorrichtungsschlüssel. Die Scananwendung umfasst mindestens ein Sendemodul, eingerichtet zum Bewirken eines Aussendens des verschlüsselten privaten Scanauftragsschlüssels durch ein Kommunikationsmodul des mobilen Nutzerendgeräts.

Die genannten Module der Scananwendung sind insbesondere durch einen Prozessor ausführbare Softwaremodule.

Die Scananwendung in Form eines Computerprogramms, insbesondere die Instruktionen bzw. Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein mobiles Nutzerendgerät einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor des Nutzerendgeräts kann beispielsweise Zwischenergebnisse oder Ähnliches in dem Hauptspeicher speichern.

Gemäß einer bevorzugten Ausführungsform der anmeldungsgemäßen Scananwendung kann das Sendemodul eingerichtet sein zum Bewirken eines Aussendens einer Bestätigungsnachricht bei einem Erhalt des privaten Scanauftragsschlüssels, insbesondere nach einer (erfolgreichen) Speicherung des privaten Scanauftragsschlüssels in dem Datenspeicher des mobilen Nutzerendgeräts.

Ein noch weiterer nicht-beanspruchter Aspekt der Anmeldung ist ein mobiles Nutzerendgerät mit einer auf dem mobilen Nutzerendgerät installierten zuvor beschrieben Scananwendung. Beispielhafte und nicht abschließende mobile Nutzerendgeräte sind hierbei Smartphones, Tablet-Computer, mobile Spielkonsolen, Laptops, Netbooks, Datenbrillen, Smart-Watches und ähnliche Wearables.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen. Ferner versteht es sich, dass Ausdrücke, wie "erster", "zweiter" etc., keine Reihenfolge angeben, sondern lediglich zum Unterscheiden zweier Elemente dienen.

Die Merkmale der Verfahren, Scanserveranordnungen, Scanvorrichtungen, Scansysteme, Computervorrichtungen, mobilen Nutzerendgeräten und Scananwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäßen Verfahren, die anmeldungsgemäße Scanserveranordnung, die anmeldungsgemäße Scanvorrichtung, die anmeldungsgemäße Computervorrichtung, die anmeldungsgemäße Scananwendung, das anmeldungsgemäße Scansystem und das anmeldungsgemäße mobile Nutzerendgerät auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Scansystems gemäß dem Stand der Technik,
- Fig. 2a: eine schematische Ansicht eines Ausführungsbeispiels einer Scanserveranordnung gemäß der vorliegenden Anmeldung,
- Fig. 2b: eine schematische Ansicht eines weiteren Ausführungsbeispiels einer Scanserveranordnung gemäß der vorliegenden Anmeldung,
- Fig. 3: eine schematische Ansicht eines Ausführungsbeispiels einer Scanvorrichtung gemäß der vorliegenden Anmeldung,
- Fig. 4: eine schematische Ansicht eines Ausführungsbeispiels eines Scansystems gemäß der vorliegenden Anmeldung und eines Ausführungsbeispiels einer Scananwendung gemäß der vorliegenden Anmeldung und eines Ausführungsbeispiel einer Computervorrichtung gemäß der vorliegenden Anmeldung,
- Fig. 5: ein Diagramm eines Ausführungsbeispiels eines Verfahrens gemäß der vorliegenden Anmeldung,
- Fig. 6: ein Diagramm eines weiteren Ausführungsbeispiels eines Verfahrens gemäß der vorliegenden Anmeldung, und
- Fig. 7: ein Diagramm eines weiteren Ausführungsbeispiels eines Verfahrens gemäß der vorliegenden Anmeldung.

Ähnliche Bezugszeichen werden für zumindest ähnliche Elemente verwendet.

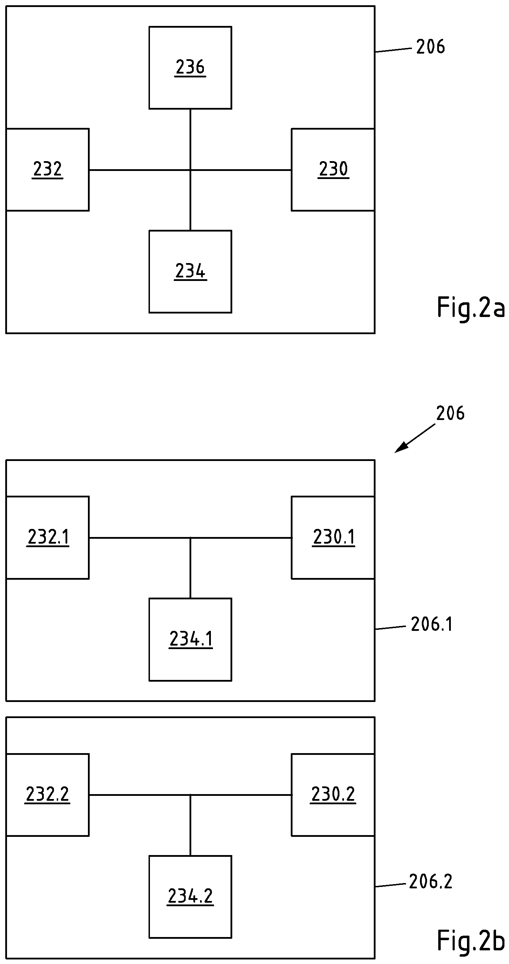

Die Figur 2a zeigt eine schematische Ansicht eines Ausführungsbeispiels einer Scanserveranordnung 206 gemäß der vorliegenden Anmeldung. Die Scanserveranordnung 206 kann insbesondere in einem Scansystem eingesetzt werden.

Die in Figur 2a dargestellte Scanserveranordnung 206 ist durch eine einzelne Scanserverkomponente gebildet. Die Scanserveranordnung 206 bzw. die Scanserverkomponente insbesondere durch mindestens eine Rechenvorrichtung mit mindestens einem Prozessor und Speichermitteln gebildet sein. Bei Varianten der Anmeldung kann eine Scanserveranordnung in einer Scanvorrichtung oder einer Computervorrichtung integriert sein, insbesondere in einer Scanvorrichtung gemäß der vorliegenden Anmeldung oder eine Computervorrichtung gemäß der vorliegenden Anmeldung.

Die dargestellte Scanserveranordnung 206 umfasst ein Empfangsmodul 230, ein Sendemodul 232, einen Datenspeicher 234 und ein Bestimmungsmodul 236. Das Empfangsmodul 230 und das Sendemodul 232 können durch ein bidirektionales Kommunikationsmodul gebildet sein. Es versteht sich, dass bei anderen Varianten der Anmeldung andere Module und/oder weitere Module vorgesehen sein können.

Das Empfangsmodul 230 kann insbesondere mindestens eine Kommunikationsschnittstelle zum Verbinden mit einem Kommunikationsnetz umfassen. Das Sendemodul 232 kann insbesondere mindestens eine Kommunikationsschnittstelle zum Verbinden mit einem Kommunikationsnetz (oder einer internen Verbindung zu einem Empfangsmodul einer Scanvorrichtung oder Computervorrichtung, in der die Scanserveranordnung in diesem Fall integriert ist) umfassen.

Es versteht sich, dass zwei oder mehr Kommunikationsschnittstellen jeweils vorgesehen sein können, insbesondere für eine entsprechende Anzahl unterschiedlicher Netzwerke (z.B. LAN, WLAN etc.).

Das mindestens eine Empfangsmodul 230 ist eingerichtet zumindest zum Erhalten eines mit einem öffentlichen Scanauftragsschlüssel eines Scanauftragsschlüsselpaares verschlüsselten Scanauftrags von einer Scanvorrichtung. Der erhaltene verschlüsselte Scanauftrag kann vorzugsweise in dem Datenspeicher 234 der Scanserveranordnung 206 (temporär, beispielsweise für eine vorgegebene maximale Zeitdauer (z.B. 1 h bis 72 h)) gespeichert werden. Nach Ablauf dieser Zeitdauer kann der Auftrag gelöscht werden. Insbesondere kann ein Scanauftragsdatensatz empfangen bzw. erhalten werden, enthaltend den verschlüsselten Scanauftrag und vorzugsweise eine eindeutige erste Scankennung. Dieser Datensatz kann in dem durchsuchbaren Datenspeicher gespeichert werden.

Ferner kann das mindestens eine Empfangsmodul 230 eingerichtet sein zum Erhalten eines mit einem öffentlichen Computervorrichtungsschlüssel eines Computervorrichtungsschlüsselpaares verschlüsselten privaten Scanauftragsschlüssels des Scanauftragsschlüsselpaares von einem mobilen Nutzerendgerät. Das Computervorrichtungsschlüsselpaar ist der Computervorrichtung (eindeutig) zugeordnet, die für das Weiterverarbeiten des Scanauftrags verwendet werden wird. Also insbesondere der Computervorrichtung, die von dem berechtigten Nutzer bedient wird.

Insbesondere kann ein Schlüsseldatensatz empfangen bzw. erhalten werden, enthaltend den verschlüsselten privaten Scanauftragsschlüssel und vorzugsweise eine eindeutige weitere Scankennung, die zu der ersten Scankennung korrespondiert, insbesondere identisch ist.

Insbesondere unmittelbar bei einem Erhalt eines Schlüsseldatensatzes (oder unmittelbar bei Erhalt einer Anforderungsnachricht von der Computervorrichtung, wobei die Anforderungsnachricht zumindest die weitere Scankennung umfassen kann) kann das Bestimmungsmodul 236 die weitere Scankennung mit der mindestens einen gespeicherten ersten Scankennung vergleichen. Wenn eine Korrespondenz, vorzugsweise Identität, zwischen der weiteren Scankennung und der ersten Scankennung durch das Bestimmungsmodul 236 bestimmt wird, kann dieses die Aussendung der entsprechenden Datensätze (oder bei einer Anforderungsnachricht nur des Scanauftragsdatensatzes) durch das Sendemodul 232 veranlassen.

Das Sendemodul 232 kann alternativ unmittelbar bei einem Erhalt eines Schlüsseldatensatzes diesen an die Computervorrichtung weiterleiten. In diesem Fall kann vorzugsweise die weitere Scankennung ebenfalls durch den öffentlichen Computervorrichtungsschlüssel verschlüsselt sein. Nach einer Entschlüsselung kann die Computervorrichtung die Anforderungsnachricht (unmittelbar) aussenden und in entsprechender Weise die Scanserveranordnung diese Anforderungsnachricht empfangen. Wie beschrieben wurde, kann dann der zugehörige Scanauftragsdatensatz bestimmt und versendet werden.

Das mindestens eine Sendemodul 232 ist eingerichtet zum Übertragen des erhaltenen verschlüsselten Scanauftrags an eine Computervorrichtung zum Weiterverarbeiten des Scanauftrags durch die Computervorrichtung, wie beschrieben wurde. Es sei angemerkt, dass ein Scanauftragsdatensatz Adressdaten und/oder eine Computervorrichtungskennung enthalten kann.

Das mindestens eine Sendemodul 232 ist ferner eingerichtet zum Übertragen des erhaltenen verschlüsselten privaten Scanauftragsschlüssels an die Computervorrichtung, wie beschrieben wurde. Es sei angemerkt, dass ein Scanauftragsdatensatz Adressdaten und/oder eine Scanvorrichtungskennung enthalten kann.

Die Figur 2b zeigt eine schematische Ansicht eines weiteren Ausführungsbeispiels einer Scanserveranordnung 206 gemäß der vorliegenden Anmeldung. Zur Vermeidung von Wiederholungen werden nachfolgend im Wesentlichen nur die Unterschiede zu dem vorherigen Ausführungsbeispiel beschrieben und ansonsten auf die Ausführungen zu Figur 2a verwiesen.

Vorliegend ist die Scanserveranordnung 206 durch eine erste Scanserverkomponente 206.1 und eine zweite Scanserverkomponente 206.2 gebildet. Die erste Scanserverkomponente 206.1 (z.B. ein E-Maiserver oder dergleichen) weist ein erstes Empfangsmodul 230.1 auf, eingerichtet zumindest zum Erhalten eines mit einem öffentlichen Scanauftragsschlüssel eines Scanauftragsschlüsselpaares verschlüsselten Scanauftrags von einer Scanvorrichtung, wie bereits beschrieben wurde. Der erhaltene verschlüsselte Scanauftrag kann vorzugsweise in dem Datenspeicher 234.1 der ersten Scanserverkomponente 206.1 gespeichert werden, wie bereits beschrieben wurde. Ferner ist ein erstes Sendemodul 232.1 vorgesehen, eingerichtet zum Übertragen des erhaltenen verschlüsselten Scanauftrags an eine Computervorrichtung zum Weiterverarbeiten des Scanauftrags durch die Computervorrichtung, wie beschrieben wurde.

Ein Bestimmungsmodul kann in dem vorliegenden Ausführungsbeispiel entfallen.

Die zweite Scanserverkomponente 206.2 umfasst ein zweites Empfangsmodul 230.2, eingerichtet zum Erhalten eines mit einem öffentlichen Computervorrichtungsschlüssel eines Computervorrichtungsschlüsselpaares verschlüsselten privaten Scanauftragsschlüssels des Scanauftragsschlüsselpaares von einem mobilen Nutzerendgerät. Ferner ist ein zweites Sendemodul 232.2 vorgesehen, eingerichtet zum Übertragen des erhaltenen verschlüsselten privaten Scanauftragsschlüssels an die Computervorrichtung, wie beschrieben wurde. Optional kann ein zweiter Datenspeicher 234.2 vorgesehen sein.

Insbesondere kann der Nutzer an der bestimmten Computervorrichtung sein E-Mailkonto öffnen, so dass er den verschlüsselten Scanauftrag von der ersten Scanserverkomponente erhalten kann. Ferner kann der Nutzer bzw. die Computervorrichtung durch die zweite Scanserverkomponente, die insbesondere auf dieser Computervorrichtung implementiert sein kann, den verschlüsselten privaten Scanauftragsschlüssel erhalten. Anschließend kann zuerst der private Scanauftragsschlüssel entschlüsselt und dann der Scanauftrag.

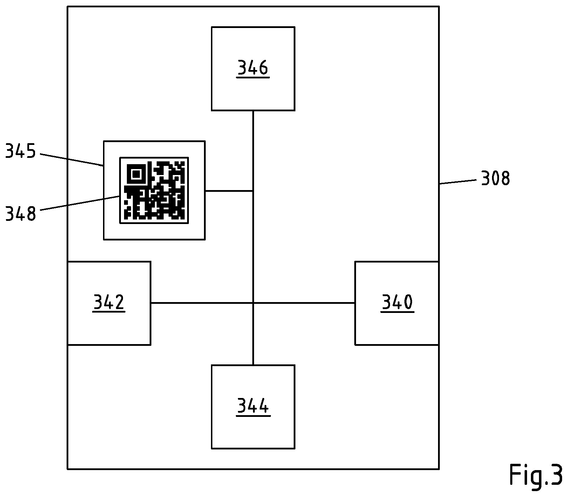

Die Figur 3 zeigt eine schematische Ansicht eines Ausführungsbeispiels einer Scanvorrichtung 308 gemäß der vorliegenden Anmeldung. Die Scanvorrichtung 308 kann insbesondere in einem Scansystem eingesetzt werden.

Die Scanvorrichtung 308 kann insbesondere mindestens einem Prozessor und Speichermittel umfassen. Bei Varianten der Anmeldung kann die Scanvorrichtung eine vorbeschriebene Scanserveranordnung zumindest teilweise umfassen.

Die Scanvorrichtung 308 ist ein Netzwerkscanner 308, der zumindest eine Scanfunktionalität aufweist. Es versteht sich, dass weitere Funktionalitäten (z.B. Druck-Funktionalität, Fax-Funktionalität) in einer Scanvorrichtung implementiert sein können.

Die dargestellte Scanvorrichtung 308 umfasst ein Sendemodul 340, ein Bereitstellungsmodul 344, einen (sicheren) Datenspeicher 342, ein Verschlüsselungsmodul 346, ein (zu Gunsten einer besseren Übersicht nicht dargestelltes) Scanmodul und ein Anzeigenmodul 345.

Das Scanmodul ist in herkömmlicher Weise dazu eingerichtet, einen Scanauftrag zu erstellen. Insbesondere kann eine Aufnahme von einem scanbaren Medium (z.B. Papier) erstellt und ein Daten des eingescannten Dokuments in Form eines Scanauftrags generiert werden. Ein Scanvorgang kann in bekannter Weise von einem Nutzer initiiert werden.

Das Bereitstellungsmodul 344 ist eingerichtet zum Bereitstellen des Scanauftragsschlüsselpaares. Insbesondere bei einer Erstellung ein Scanauftrags, also insbesondere unmittelbar nach dem Scanvorgang und der Erzeugung der entsprechenden Scandaten kann das Scanauftragsschlüsselpaar bereitgestellt werden.

Vorzugsweise kann das Bereitstellungsmodul 344 ein Schlüsselgenerierungsmodul 344 sein, eingerichtet zum Genieren des (asynchronen) Scanauftragsschlüsselpaares Vorzugsweise kann das Schlüsselgenerierungsmodul 344 für jeden erstellten Scanauftrag ein neues Scanauftragsschlüsselpaar generieren (kann auch als Sessionkeypair bezeichnet werden). Wie bereits beschrieben wurde, kann bei anderen Varianten der Anmeldung ein Scanauftragsschlüsselpaar auch für eine Mehrzahl von Scanaufträgen verwendbar bzw. gültig sein. Insbesondere kann durch die Scanvorrichtung 308 nach Erstellung eines ersten Scanauftrags abgefragt werden, ob mindestens ein weiterer Scanauftrag durch diesen Nutzer erfolgen soll. Insbesondere können dann für sämtliche Scanaufträge eines Nutzers das gleiche Scanauftragsschlüsselpaar verwendet werden.

Ferner umfasst die Scanvorrichtung 308 ein Verschlüsselungsmodul 346, eingerichtet zum Verschlüsseln zumindest des mindestens einen Scanauftrags mit dem öffentlichen Scanauftragsschlüssel des bereitgestellten, insbesondere generierten, Scanauftragsschlüsselpaares. Anders ausgedrückt, können die Scandaten des mindestens einen Scanauftrags unter Nutzung des generierten öffentlichen Scanauftragsschlüssels verschlüsselt werden. Wie bereits beschrieben wurde, können auch eine Mehrzahl einem bestimmten Nutzer zugeordneter Scanaufträge gemeinsam verschlüsselt werden oder sequentiell stets mit dem gleichen Schlüssel.

Das Verschlüsseln eines Scanauftrags umfasst insbesondere auch ein Verschlüsseln des Scanauftrags mit einem synchronen Schlüssel (der beispielsweise auch der Scanserveranordnung bekannt ist) und ein anschließendes Verschlüsseln nur des synchronen Schlüssels mit dem öffentlichen Scanauftragsschlüssels. Dies kann insbesondere vorteilhaft sein hinsichtlich der erforderlichen Rechenzeit und/oder der zu übertragenen Datenmenge. Optional kann eine erste Scankennung (die eindeutig dem Scanauftrag zugeordnet ist) mit verschlüsselt werden.

Ein Sendemodul 340 kann insbesondere mindestens eine Kommunikationsschnittstelle zum Verbinden mit einem Kommunikationsnetz (oder einer internen Verbindung zu einem Empfangsmodul einer Scanserveranordnung, der in diesem Fall in der Scanvorrichtung integriert ist) umfassen. Es versteht sich, dass zwei oder mehr Kommunikationsschnittstellen jeweils vorgesehen sein können, insbesondere für eine entsprechende Anzahl unterschiedlicher Netzwerke (z.B. LAN, WLAN etc.).

Nach einer Verschlüsselung des mindestens Scanauftrags mit dem öffentlichen Scanauftragsschlüssel kann das Sendemodul 340 den verschlüsselten Scanauftrag an die Scanserveranordnung übertragen. Insbesondere kann ein Scanauftragsdatensatz übertragen werden, enthaltend zumindest den Scanauftrag und die beschriebene erste Scankennung.

Ferner kann ein Bereitstellen, durch die Scanvorrichtung 308, des privaten Scanauftragsschlüssels des bereitgestellten Scanauftragsschlüsselpaares erfolgen derart, dass ein mobiles Nutzerendgerät den privaten Scanauftragsschlüssel (nur) an der Scanvorrichtung 308 erhalten kann. Dies meint insbesondere, dass ein entfernt (z.B. außerhalb des Raumes, in dem sich die Scanvorrichtung befindet, und/oder mit einem Abstand von größer als 5 m, vorzugsweise 1 m, und/oder in dem Raum, in dem die Scanvorrichtung angeordnet ist) von der Scanvorrichtung 308 angeordnetes Nutzerendgerät den privaten Scanauftragsschlüssel nicht erfassen kann.

Das Bereitstellen des privaten Scanauftragsschlüssels des bereitgestellten Scanauftragsschlüsselpaares umfasst in dem vorliegenden Ausführungsbeispiel insbesondere ein Anzeigen eines optischen Scanauftragscodes 348 durch die optische Anzeige 345 (beispielsweise ein Display) der Scanvorrichtung 308. Der optische Scanauftragscode 348 (vorzugsweise ein Barcode, wie ein QR Code) enthält insbesondere den privaten Scanauftragsschlüssel. Wie bereits beschrieben wurde, kann bei anderen Varianten der Anmeldung die Bereitstellung über eine Nahfeldkommunikationsverbindung erfolgen.

Vorzugsweise kann der Scanauftragscode 348 weiteren Daten umfassen, insbesondere zumindest die beschriebene weitere Scankennung (die vorzugsweise identisch ist mit der ersten Scankennung und ebenfalls eindeutig dem Scanauftrag zugeordnet ist). Ein derartiger Scanauftragscode 348 kann durch eine optische Erfassungseinrichtung (insbesondere eine Kamera) des mobilen Nutzerendgeräts des Nutzers erfasst bzw. gescannt werden.

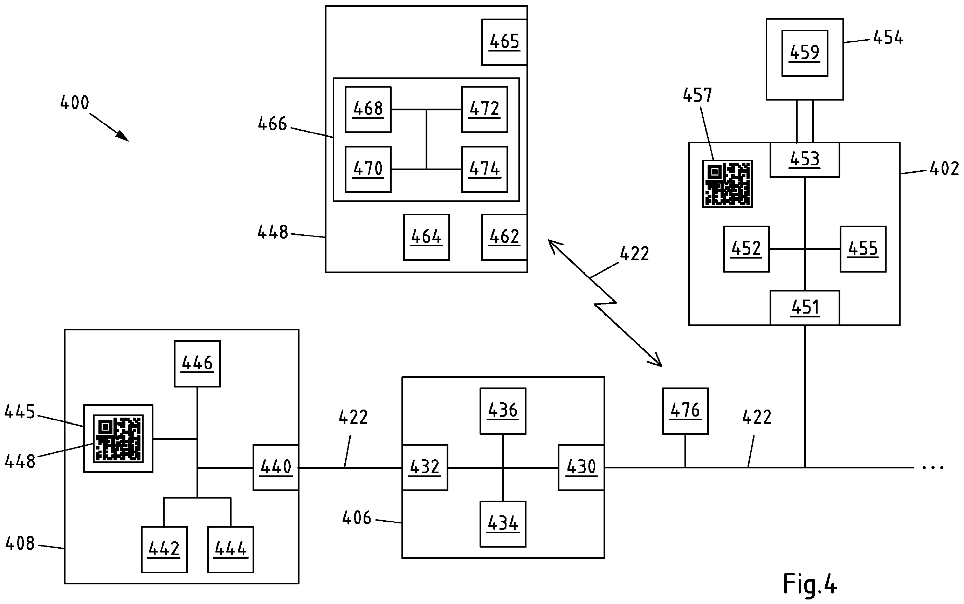

Die Figur 4 zeigt eine schematische Ansicht eines Ausführungsbeispiels eines Scansystems 400 gemäß der vorliegenden Anmeldung und ein Ausführungsbeispiel einer Scananwendung 466 in Form eines ausführbaren Computerprogramms 466. Ferner ist in der Figur 4 ein Ausführungsbeispiel einer Computervorrichtung 402 der vorliegenden Anmeldung dargestellt. Das Scansystem 400, insbesondere ein Netzwerkscansystem 400, kann insbesondere in mindestens einem Bürogebäude implementiert sein.

Das Scansystem 400 umfasst eine Scanvorrichtung 408 und einen mit der Scanvorrichtung 408 kommunikativ verbundene Scanserveranordnung 406. Die Scanserveranordnung ist vorliegend gemäß Figur 2a gebildet, kann jedoch ebenfalls gemäß Figur 2b gebildet sein. Vorliegend ist ein (drahtloses und/oder drahtgebundenes) Kommunikationsnetz 422 vorgesehen. Wie bereits beschrieben wurde, kann bei Varianten der Anmeldung die Scanserveranordnung zumindest teilweise auch in der Scanvorrichtung und/oder in der Computervorrichtung integriert sein.

Die mindestens eine Scanvorrichtung 408 kann insbesondere entsprechend der Scanvorrichtung nach Figur 3 gebildet sein, so dass zur Vermeidung von Wiederholungen nachfolgend im Wesentlichen auf die Ausführungen zur Figur 3 verwiesen wird.

Wie bereits beschrieben wurde, kann die mindestens eine Scanserveranordnung 406 insbesondere entsprechend der Scanserveranordnung nach Figur 2a oder b gebildet sein, so dass zur Vermeidung von Wiederholungen nachfolgend im Wesentlichen auf die Ausführungen zur Figur 2a bzw. 2b verwiesen wird.

Wie ferner zu erkennen ist, ist mindestens ein mobiles Nutzerendgerät 458 (beispielsweise ein Smartphone) und mindestens eine (zumindest temporär stationäre) Computervorrichtung 402 in Form eines Arbeitsplatzrechners 402 vorgesehen.

Vorzugsweise können eine Vielzahl von mobilen Nutzerendgeräten 458 und/oder eine Vielzahl von Computervorrichtungen 402 vorgesehen sein. Eine Vielzahl von Computervorrichtungen 402 kann die Scanvorrichtung 408 als Netzwerkressource nutzen. Vorzugsweise kann das Scansystem 400 das mindestens eine mobile Nutzerendgerät 458 und/oder die mindestens eine Computervorrichtung 402 umfassen.

Die mindestens eine Computervorrichtung 402 kann über ein Empfangsmodul 451, insbesondere in Form eines Kommunikationsmoduls 451, kommunikativ mit der Scanserveranordnung 406 und der Scanvorrichtung 408 via dem Kommunikationsnetz 422 verbindbar sein. Das Scansystem 400 kann das Kommunikationsnetz 422 umfassen.

Die Computervorrichtung 402 kann eine Anzeige 454 in Form eines Displays 454 bzw. Bildschirms 454 umfassen.

Ferner umfasst die Computervorrichtung 402 ein Schlüsselpaarbereitstellungseinrichtung 457, einen (sicheren) Datenspeicher 452, ein Entschlüsselungsmodul 455 und ein Weiterverarbeitungsmodul 453, eingerichtet zum Weiterverarbeiten eines entschlüsselten Scanauftrags, beispielsweise zum Bewirken eines Anzeigens des entschlüsselten und eingescannten Dokuments 459 durch die optische Anzeige 454.

Die mindestens eine Schlüsselpaarbereitstellungseinrichtung 457 ist eingerichtet zum Bereitstellen eines Computervorrichtungsschlüsselpaars, enthaltend einen privaten Computervorrichtungsschlüssel und einen öffentlichen Computervorrichtungsschlüssel. Der mindestens eine (gesicherte) Datenspeicher 452 ist zum Speichern des privaten Computervorrichtungsschlüssels des bereitgestellten Computervorrichtungsschlüsselpaares eingerichtet.

Die Schlüsselpaarbereitstellungseinrichtung 457 ist ferner eingerichtet zum Bereitstellen des öffentlichen Computervorrichtungsschlüssels des bereitgestellten Computervorrichtungsschlüsselpaares, derart, dass das mobile Nutzerendgerät 458 den öffentlichen Computervorrichtungsschlüssel (nur) an der Computervorrichtung 402 erhalten kann. In dem vorliegenden Ausführungsbeispiel ist dies dadurch umgesetzt, dass ein optischer Computervorrichtungscode 457 (beispielsweise ein Barcode, insbesondere ein QR- und/oder 2D- Barcode) auf einer sichtbaren Außenseite der Computervorrichtung 402 angeordnet ist.

Beispielsweise kann der Computervorrichtungscode 457 auf der Außenseite der Computervorrichtung 402 aufgedruckt sein oder ein Aufkleber, auf dem der Computervorrichtungscode 457 aufgebracht ist, kann an einer Außenseite aufgeklebt sein. Bei Varianten der Anmeldung kann der Computervorrichtungscode 457 auch durch das Display 454 der Computervorrichtung 402 angezeigt werden (beispielsweise nach einer manuellen Anforderung durch einen Nutzer).

Ein derartiger Computervorrichtungscode 457 kann durch eine optische Erfassungseinrichtung 465 eines mobilen Nutzerendgeräts 448 erfasst bzw. detektiert werden. Der Computervorrichtungscode 457 enthält zumindest den öffentlichen Computervorrichtungsschlüssel. Weitere Daten, wie eine Computervorrichtungskennung und/oder Adressdaten der Computervorrichtung 402, können enthalten sein.

Das mindestens eine Empfangsmodul 451 ist eingerichtet zum Erhalten eines mit einem öffentlichen Scanauftragsschlüssel eines Scanauftragsschlüsselpaares verschlüsselten Scanauftrags von einer Scanserveranordnung 406, beispielsweise einer Scanserveranordnung 206 entsprechend dem Ausführungsbeispiel nach Figur 2a oder 2b.

Das mindestens eine Empfangsmodul 451 ist ferner eingerichtet zum Erhalten eines mit dem bereitgestellten öffentlichen Computervorrichtungsschlüssel verschlüsselten privaten Scanauftragsschlüssel eines Scanauftragsschlüsselpaares von dem mobilen Nutzerendgerät 458, vorzugsweise via der Scanserveranordnung 406. Insbesondere können der verschlüsselte Scanauftrag und der verschlüsselte private Scanauftragsschlüssel nahezu gleichzeitig empfangen werden. Auch ist denkbar, dass ein gemeinsamer Datensatz empfangen wird. Auch kann, wie beschrieben wurde, zunächst nur der verschlüsselte Schlüsseldatensatz empfangen werden und dann, als Antwort auf eine entsprechende Anforderungsnachricht, der verschlüsselte Scanauftrag.

Optional können die erste und die weitere Scankennung vorgesehen sein, um in analoger Weise wie zuvor beschrieben wurde, eine Zuordnung von Scanauftrag und privatem Scanauftragsschlüssel zu ermöglichen.

Das mindestens eine Entschlüsselungsmodul 455 ist eingerichtet zum Entschlüsseln des erhaltenen verschlüsselten privaten Scanauftragsschlüssels mit dem gespeicherten privaten Computervorrichtungsschlüssel des Computervorrichtungsschlüsselpaares. Insbesondere kann das Entschlüsselungsmodul 455 auf den Datenspeicher 452 zugreifen und den dort gespeicherten privaten Computervorrichtungsschlüssel auf den erhaltenen verschlüsselten privaten Scanauftragsschlüssel anwenden.

Wie beschrieben wurde, kann nach dem Entschlüsseln eine Anforderungsnachricht, durch ein Sendemodul (beispielsweise das Kommunikationsmodul 451), versendet werden, um den zugehörigen Scanauftrag anzufordern.

Das Entschlüsselungsmodul 455 ist ferner eingerichtet zum Entschlüsseln des erhaltenen verschlüsselten Scanauftrags mit dem entschlüsselten privaten Scanauftragsschlüssel. Der dann entschlüsselte Scanauftrag bzw. die entschlüsselten Scandaten werden dann dem Weiterverarbeitungsmodul 453 bereitgestellt. Wie bereits beschrieben wurde, kann der verschlüsselte Scanauftrag auch durch eine E-Mail-Nachricht oder eine ähnliche Nachricht und einem Zugriff auf das entsprechende Konto erhalten werden. In jedem Fall erfolgt eine lokale Entschlüsselung durch die Computervorrichtung 402.

Wie schematisch dargestellt ist, ist auf dem mobilen Nutzerendgerät 458 eine Scananwendung 466 installiert, insbesondere in Form einer "App". Die dargestellte Scananwendung 466 weist eine Mehrzahl von durch einen Prozessor des mobilen Nutzerendgeräts 458 ausführbare Softwaremodule 468, 470, 472 und 474 auf. Die Module 468, 470, 472 und 474 können zumindest teilweise mit Modulen 465, 462 und 464 des mobilen Nutzerendgeräts 458 interagieren.

Die Scananwendung 466 umfasst mindestens ein Empfangsmodul 468, eingerichtet zum Erhalten des von der Scanvorrichtung 408 bereitgestellten privaten Scanauftragsschlüssels eines Scanauftragsschlüsselpaares. Vorliegend kann das Empfangsmodul 468 den durch die Kamera 465 detektierten Scanauftragscode 448 erhalten und beispielsweise den in diesem Code enthaltenen privaten Scanauftragsschlüssel extrahieren.

Ferner kann die Scananwendung 466 mindestens ein Speichermodul 470 umfassen, eingerichtet zum Speichern des erhaltenen privaten Scanauftragsschlüssels in einem (sicheren) Datenspeicher 464 des mobilen Nutzerendgeräts 458.

Darüber hinaus ist das Empfangsmodul 468 insbesondere eingerichtet zum Erhalten eines öffentlichen Computervorrichtungsschlüssels eines durch die Computervorrichtung 402 an der Computervorrichtung 402 bereitgestellten Computervorrichtungsschlüsselpaares. Vorliegend kann das Empfangsmodul 468 den durch die Kamera 465 detektierten Computervorrichtungscode 457 erhalten und beispielsweise den in diesem Code 457 enthaltenen privaten Computervorrichtungsschlüssel extrahieren.

Die Scananwendung 466 weist mindestens ein Verschlüsselungsmodul 472 auf, eingerichtet zum Verschlüsseln des gespeicherten privaten Scanauftragsschlüssels mit dem erhaltenen öffentlichen Computervorrichtungsschlüssel. Insbesondere bei Erhalt des öffentlichen Computervorrichtungsschlüssels kann der gespeicherte private Computervorrichtungsschlüssel, insbesondere unmittelbar, verschlüsselt werden.

Ferner umfasst die Scananwendung 466 mindestens ein Sendemodul 474, eingerichtet zum Bewirken eines Aussendens des verschlüsselten privaten Scanauftragsschlüssels durch ein Kommunikationsmodul 462 des mobilen Nutzerendgeräts 458. Insbesondere kann das mobile Nutzerendgerät 458 über das Kommunikationsmodul 462 (z.B. enthaltend eine WLAN-Schnittstelle oder dergleichen) an das Kommunikationsnetz 422 anschließbar bzw. angeschlossen sein. Wie zu erkennen ist, kann ein drahtloser Kanal mit einer Kommunikationseinrichtung 476 (beispielsweise ein WLAN-Knoten, der mit dem drahtgebundenen Netzwerk gekoppelt ist) für die Kommunikation verwendet werden.

Das Sendemodul 474 ist ferner insbesondere eingerichtet zum Bewirken eines Aussendens einer Bestätigungsnachricht durch das Kommunikationsmodul 462 des mobilen Nutzerendgeräts 458, bei einem Erhalt des privaten Scanauftragsschlüssels. Beispielsweise kann bei einer Detektion eines erfolgreichen Speicherns des privaten Scanauftragsschlüssels die Aussendung unmittelbar bewirkt werden.

Der private Scanauftragsschlüssel des bereitgestellten Scanauftragsschlüsselpaares kann auf der Scanvorrichtung 408 nach einem Erhalt durch das mobile Nutzerendgerät 458 gelöscht werden, also insbesondere unmittelbar nach Erhalt der Bestätigungsnachricht. Wie bereits beschrieben wurde, kann die optionale Löschung bei Varianten der Anmeldung auch zeitabhängig sein.

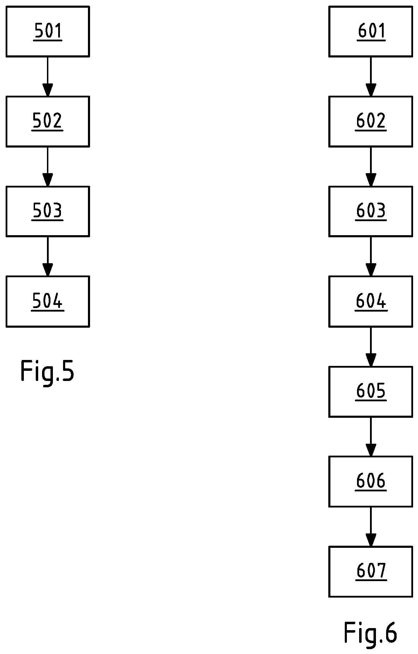

Die Figur 5 zeigt ein Diagramm eines Ausführungsbeispiels eines Verfahrens gemäß der vorliegenden Anmeldung zum Betreiben eines Scansystems (vgl. z.B. Fig. 4), zumindest zum Betreiben einer Scanserveranordnung (vgl. z.B. Fig. 2a, 2b, 4).

In einem ersten Schritt 501 erfolgt ein Erhalten, durch die Scanserveranordnung, zumindest eines mit einem öffentlichen Scanauftragsschlüssel eines Scanauftragsschlüsselpaares verschlüsselten Scanauftrags von einer mit dem Kommunikationsnetz verbindbaren Scanvorrichtung (wie zuvor beschrieben wurde).

In einem (zeitlich insbesondere nachgelagerten) Schritt 502 erfolgt ein Erhalten, durch die Scanserveranordnung, zumindest eines mit einem öffentlichen Computervorrichtungsschlüssel eines Computervorrichtungsschlüsselpaares verschlüsselten privaten Scanauftragsschlüssel des Scanauftragsschlüsselpaares von einem mobilen Nutzerendgerät (wie zuvor beschrieben wurde). Das Computervorrichtungsschlüsselpaar ist der Computervorrichtung (systemweit eindeutig) zugeordnet.

In Schritt 503 erfolgt ein Übertragen, durch die Scanserveranordnung, zumindest des erhaltenen verschlüsselten Scanauftrags an die Computervorrichtung zum Weiterverarbeiten des Scanauftrags durch die Scanvorrichtung (wie zuvor beschrieben wurde).

In Schritt 504 erfolgt ein Übertragen, durch die Scanserveranordnung, zumindest des erhaltenen verschlüsselten privaten Scanauftragsschlüssels an die Computervorrichtung (wie zuvor beschrieben wurde).

Insbesondere die Schritte 503 und 504 können zumindest teilweise parallel durchgeführt werden und/oder die genannten Daten können in einem Datensatz (in einem oder mehreren Datenpaketen) übertragen werden. Wie beschrieben wurde, kann jedoch auch ein zeitlicher Versatz vorgesehen sein, insbesondere wenn der Scanauftrag erst bei Erhalt einer Anforderungsnachricht versendet wird.

Die Figur 6 zeigt ein Diagramm eines weiteren Ausführungsbeispiels zum Betreiben eines Scansystems (vgl. z.B. Fig. 4), zumindest zum Betreiben einer Computervorrichtung (vgl. z.B. Fig. 3, 4).

In einem ersten Schritt 601 erfolgt ein Bereitstellen, durch die Computervorrichtung, eines Computervorrichtungsschlüsselpaars, enthaltend einen privaten Computervorrichtungsschlüssel und einen öffentlichen Computervorrichtungsschlüssel (wie zuvor beschrieben wurde).

In Schritt 602 erfolgt ein Speichern, durch die Computervorrichtung, des privaten Computervorrichtungsschlüssels des bereitgestellten Computervorrichtungsschlüsselpaares in einem Datenspeicher der Computervorrichtung und insbesondere ein Bereitstellen des öffentlichen Computervorrichtungsschlüssels des bereitgestellten Computervorrichtungsschlüsselpaares an der Computervorrichtung, derart, dass das mobile Nutzerendgerät den öffentlichen Computervorrichtungsschlüssel (nur) an der Computervorrichtung erhalten kann (wie zuvor beschrieben wurde).

Ferner erfolgt in Schritt 603 ein Erhalten, durch die Computervorrichtung, eines mit dem bereitgestellten öffentlichen Computervorrichtungsschlüssel verschlüsselten privaten Scanauftragsschlüssels eines Scanauftragsschlüsselpaares von einem mobilen Nutzerendgerät via der Scanserveranordnung (wie bereits beschrieben wurde).

In dem nächsten Schritt 604 kann ein Erhalten, durch die Computervorrichtung, eines mit einem öffentlichen Scanauftragsschlüssel eines Scanauftragsschlüsselpaares verschlüsselten Scanauftrags von einer Scanserveranordnung erfolgen (wie bereits beschrieben wurde).

Dann erfolgt in Schritt 605 ein Entschlüsseln, durch die Computervorrichtung, des erhaltenen verschlüsselten privaten Scanauftragsschlüssels mit dem gespeicherten privaten Computervorrichtungsschlüssel des Computervorrichtungsschlüsselpaares (wie bereits beschrieben wurde). Anschließend erfolgt in Schritt 606 ein Entschlüsseln, durch die Computervorrichtung, des erhaltenen verschlüsselten Scanauftrags mit dem entschlüsselten privaten Scanauftragsschlüssel (wie bereits beschrieben wurde).

Optional kann nach Schritt 605 zunächst eine Anforderungsnachricht gesendet werden. Als Antwort hierauf kann dann erst der Scanauftrag entsprechend Schritt 604 erhalten werden. Dann kann der Schritt 606 folgen.

In einem weiteren Schritt 607 kann ein Weiterverarbeiten des entschlüsselten Scanauftrags bzw. der entsprechenden Scandaten erfolgen (wie bereits beschrieben wurde).

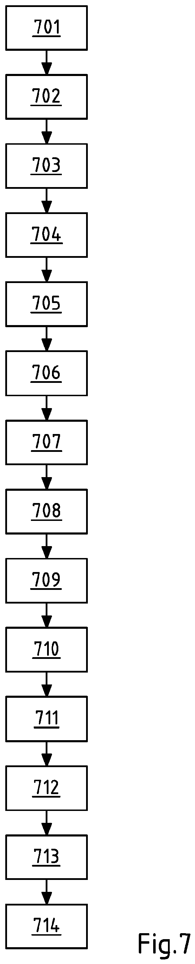

Vorzugsweise können die Verfahren nach Figur 5 und 6 miteinander kombiniert werden. Dies wird nachfolgend an einem besonders bevorzugten Ausführungsbeispiel mit Hilfe der Figur 7 beispielhaft erläutert. Die Figur 7 zeigt ein Diagramm eines weiteren Ausführungsbeispiels eines Verfahrens zum Betreiben eines Scansystems (vgl. z.B. Fig. 4).

In einem ersten Schritt 701 kann ein Scanauftrag durch die Scanvorrichtung 408, die von einem berechtigten Nutzer, der über ein mobiles Nutzerendgerät 458 verfügt, bedient wird, erstellt werden. Wird die Erstellung eines Scanauftrags detektiert (also insbesondere ein eingescannte Daten aufgrund einer entsprechenden Nutzereingabe), kann in Schritt 702 ein (asynchrones) Scanauftragsschlüsselpaar für diesen Scanauftrag generiert werden, das nur für diesen Scanauftrag gültig ist. Wie beschrieben, können bei mehreren (zeitlich unmittelbar hintereinander generierten) Scanaufträge des gleichen Nutzers auch das gleiche Scanauftragsschlüsselpaar verwendet werden.

In Schritt 703 kann dann dieser Scanauftrag mit dem öffentlichen Scanauftragsschlüssel des generierten Scanauftragsschlüsselpaar verschlüsselt werden. Insbesondere parallel hierzu kann der private Scanauftragsschlüssel in Schritt 704 in Form eines optischen Scanauftragscodes durch eine optische Anzeige 445 der Scanvorrichtung 408 angezeigt werden.

In Schritt 705 kann ein Versenden des verschlüsselten Scanauftrags durch die Scanvorrichtung 408 erfolgen. Insbesondere kann ein Scanauftragsdatensatz versendet werden, enthaltend den verschlüsselten Scanauftrag, eine erste Scankennung (beispielsweise gebildet durch Nutzerkennung und Zeitstempel z.B. der Scanauftragserstellung) und eine Computervorrichtungskennung und/oder Computervorrichtungsadresse von der Computervorrichtung, die zum Weiterverarbeiten des Scanauftrags verwendet werden soll bzw. von dem Nutzer aus insbesondere einer Mehrzahl von verfügbaren Computervorrichtungen ausgewählt wurde. Dieser Schritt umfasst insbesondere ein Erhalten des verschlüsselten Scanauftrags, vorzugsweise des beschriebenen Scanauftragsdatensatzes, durch die Scanserveranordnung 406.

Die vorgenannten Schritte sind insbesondere eigenständig erfinderisch und dienen insbesondere dem Betreiben einer Scanvorrichtung.

In Schritt 706 (der zumindest teilweise parallel zu Schritt 705 ausgeführt werden kann) kann ein Erfassen des angezeigten Scanauftragscodes erfolgen. Der Scanauftragscode kann vorzugsweise den genannten privaten Scanauftragsschlüssel und insbesondere eine weitere Scankennung (beispielsweise gebildet durch Nutzerkennung und Zeitstempel z.B. der Scanauftragserstellung) und vorzugsweise eine Computervorrichtungskennung und/oder Computervorrichtungsadresse enthalten, die zum Weiterverarbeiten des Scanauftrags verwendet werden soll bzw. von dem Nutzer aus insbesondere einer Mehrzahl von verfügbaren Computervorrichtungen ausgewählt wurde. Vorzugsweise können die erste Scankennung und die weitere Scankennung identisch sein und insbesondere dem Scanauftrag eindeutig zugeordnet sein.

Die insbesondere aus dem Scanauftragscode extrahierten Daten (privater Scanauftragsschlüssel, Scankennung und Computervorrichtungskennung und/oder Computervorrichtungsadresse) können in einem Datenspeicher des mobilen Nutzerendgeräts 458 gespeichert werden (Schritt 707).

Der genannte private Scanauftragsschlüssel kann nach Ablauf einer bestimmten Zeitdauer (z.B. nach 30 s nach Start des optischen Anzeigens des Scanauftragscodes) und/oder nach Erhalt einer (von dem mobilen Nutzerendgerät 458 gesendeten) Bestätigungsnachricht auf der Scanvorrichtung 408 gelöscht werden.

Der Nutzer kann, zusammen mit seinem mobilen Nutzerendgerät 458, sich nach dem Einscannen des Scanauftragscodes von der Scanvorrichtung 408 zu der (in der Regel) entfernt von der Scanvorrichtung 408 angeordneten Computervorrichtung 402 begeben. Beispielsweise kann die Scanvorrichtung 408 in einem anderen Raum als die Computervorrichtung 402 oder zumindest deutlich entfernt (größer als 5 m, insbesondere größer als 10 m) von der Computervorrichtung 402 befinden.

An der Computervorrichtung 402 kann in Schritt 708 durch dieses mobile Nutzerendgerät 458 (insbesondere durch den berechtigten Nutzer) der Computervorrichtungscode 448 erfasst werden, insbesondere mittels der Kamera eingescannt werden. Der Computervorrichtungscode enthält zumindest den öffentlichen Computervorrichtungsschlüssel eines (asynchronen) Computervorrichtungsschlüsselpaares, das der Computervorrichtung 402 eindeutig zugeordnet ist, und optional die Computervorrichtungskennung und/oder die Computervorrichtungsadresse der Computervorrichtung 402.

Es sei angemerkt, dass das Computervorrichtungsschlüsselpaar einer Computervorrichtung 402 regelmäßig aktualisiert werden kann, also insbesondere ein neues Computervorrichtungsschlüsselpaar generiert werden kann.

In Schritt 708 kann ein Verschlüsseln des gespeicherten privaten Scanauftragsschlüssels mit dem erhaltenen öffentlichen Computervorrichtungsschlüssel erfolgen, durch die Scananwendung 466 bzw. das mobile Nutzerendgeräts 458.

Vor diesem Schritt kann optional abgeglichen werden, ob die an der Computervorrichtung 402 erfasste Computervorrichtungskennung und/oder Computervorrichtungsadresse mit der Computervorrichtungskennung und/oder die Computervorrichtungsadresse übereinstimmt, die mit dem privaten Scanauftragsschlüssel gespeichert wurde. Ist dies nicht der Fall, kann ein entsprechender Hinweis über eine Schnittstelle des mobilen Endgeräts 458 an den Nutzer ausgegeben werden. Wenn bei dem optionalen Abgleich eine Übereinstimmung festgestellt wird, kann der gespeicherte private Scanauftragsschlüssel mit dem erhaltenen öffentlichen Computervorrichtungsschlüssel in Schritt 708 verschlüsselt werden.

Bei anderen Varianten kann auch eine E-Mail-Adresse des Nutzers als Alternative zu der Computervorrichtungskennung und/oder die Computervorrichtungsadresse verwendet werden, wie bereits beschrieben wurde.

In Schritt 709 kann der verschlüsselte private Scanauftragsschlüssel übertragen werden. Vorzugsweise kann ein Schlüsseldatensatz übertragen werden, enthaltend den verschlüsselten Scanauftragsschlüssel, die weitere Scankennung und insbesondere die Computervorrichtungskennung und/oder die Computervorrichtungsadresse (oder eine E-Mail-Adresse). Der Schritt 709 umfasst insbesondere ein Erhalten, durch die Scanserveranordnung 406, des verschlüsselten privaten Scanauftragsschlüssels, insbesondere des genannten Schlüsseldatensatzes. Bei Varianten der Anmeldung kann Scanauftragsschlüssel und Scankennung gemeinsam verschlüsselt sein, wie ausgeführt wurde.

Nach dem Erhalten der genannten Daten kann insbesondere unmittelbar danach in Schritt 710 bestimmt werden, ob ein zughöriger Scanauftrag in dem Datenspeicher 434 der Scanserveranordnung 406 gespeichert ist. Insbesondere kann die empfangene weitere Scankennung mit sämtlichen gespeicherten ersten Scankennungen der gespeicherten Scanaufträge verglichen werden. Wie beschrieben wurde, kann der Schlüsseldatensatz auch (unmittelbar) an die Computervorrichtung 402 weitergeleitet werden und das Bestimmen erst bei Erhalt einer vorbeschriebenen Anforderungsnachricht erfolgen.

Wird eine Korrespondenz, im vorliegenden Ausführungsbeispiel eine Identität, zwischen der erhaltenen weiteren Scankennung und einer gespeicherten ersten Scankennung detektiert, kann der zu dieser ersten Scankennung gespeicherte verschlüsselte Scanauftrag, vorzugsweise Scanauftragsdatensatz, und der erhaltene verschlüsselte private Scanauftragsschlüssel, insbesondere der entsprechenden Schlüsseldatensatz, (zusammen) übertragen werden (Schritt 711).

Insbesondere erfolgt in dem vorliegenden Beispiel ein Übertragen an die Computervorrichtung 402, abhängig von der Computervorrichtungskennung und/oder der Computervorrichtungsadresse (und/oder einer E-Mail-Adresse). Der Schritt 711 umfasst zumindest ein Erhalten, durch die Computervorrichtung 402, des erhaltenen verschlüsselten Scanauftrags und des verschlüsselten privaten Scanauftragsschlüssel durch die Computervorrichtung 402.

In Schritt 712 erfolgt ein Entschlüsseln, durch die Computervorrichtung 402, des privaten Scanauftragsschlüssels unter Nutzung des privaten Computervorrichtungsschlüssels der Computervorrichtung 402.

Anschließend wird, in Schritt 713, dieser entschlüsselte private Scanauftragsschlüssel durch die Computervorrichtung 402 verwendet, um den zugehörigen Scanauftrag zu entschlüsseln. Auf den Scanauftrag kann beispielsweise über ein E-Mail-Konto zugegriffen werden.

Dann kann in Schritt 714 der entschlüsselte Scanauftrag weiterverarbeitet werden. Der sich an der Computervorrichtung 402 befindende berechtigte Nutzer kann beispielsweise das angezeigte Dokument entgegennehmen. Ein sicheres Scannen und Übertragen des Scanauftrags kann gewährleistet werden.

Nachfolgend wird die Anmeldung nochmal in Kürze beschrieben: Wie bereits beschrieben wurde, kann in der heutigen Zeit von einer flächendeckenden Verfügbarkeit von Smartphones oder ähnlichen mobilen Nutzerendgeräten ausgegangen werden. Anmeldungsgemäß ist erkannt worden, dass es sich daher anbietet, die für einen "Signaturkarten-Ansatz" benötigte Infrastruktur durch den Einsatz von mobilen Nutzerendgeräten überflüssig zu machen.

Das Ziel der Anmeldung ist es ferner, eine benutzerbezogene Verschlüsselung von Scanausgaben zu erreichen. Anstatt aber einen tatsächlich persönlichen Schlüssel zu verwenden, basiert der anmeldungsgemäße Ansatz insbesondere auf einem sogenannten Session-Schlüsselpaar, d.h. es handelt sich um ein (asynchrones) Schlüsselpaar, das vorzugsweise ausschließlich für diesen einen Scanvorgang Verwendung finden kann. Damit ist das Schlüsselpaar (inhärent) personenbezogen (er wird ja in dem Augenblick nur von der scannenden und berechtigten Person verwendet, ist dieser Person also eindeutig zugeordnet), und darüber hinaus auch gerätebezogen (weil er nur für den Vorgang für das zum Weiterverarbeiten zum Einsatz kommende Gerät (also die ausgewählte Computervorrichtung) gilt) und auch scanauftragsbezogen, weil für jeden Scanauftrag ein neuer Schlüssel generiert werden kann. Hierdurch kann die Sicherheit im Vergleich zum Stand der Technik damit signifikant erhöht werden.

Der anmeldungsgemäße bevorzugte Scanablauf bzw. das bevorzugte Verfahren kann in vier Phasen aufgeteilt werden, wobei die einzelnen Phasen eigenständig erfinderisch sind:
1. Job-Session-Schlüsselpaar-Generierung (bzw. Scanauftragsschlüsselpaar-Generierung, insbesondere durch die Scanvorrichtung) und Übertragung des Job-Session-Private-Key (bzw. privaten Scanauftragsschlüssel) auf ein mobiles Nutzerendgerät von dem Nutzer, der den Scanauftrag erstellt hat bzw. hierfür berechtigt ist.
2. Verschlüsselung des Jobs (bzw. Scanauftrags) mit dem Job-Session-Public-Key und Übertragung des verschlüsselten Scanauftrags an die Scanserveranordnung
3. Übertragung des Job-Session-Private-Key von dem mobilen Nutzerendgerät auf den Computer unter Zuhilfenahme eines Computer-Session-Paares (Computervorrichtungsschlüsselpaars), bestehend aus Computer-Session-Private-Key und Computer-Session-Public-Key.
4. Übertragung des mit dem Job-Session-Public-Key verschlüsselten Scanjobs von die Scanserveranordnung zum Endgerät bzw. zur Computervorrichtung und Entschlüsselung des verschlüsselten Scanauftrags mit dem Job-Session-Private-Key auf der Computervorrichtung.

### Phase1: Schlüsselübertragung

Sobald ein Dokument eingescannt wird, kann der Scanner bzw. die Scanvorrichtung für den Scanvorgang bzw. -auftrag ein neues Schlüsselpaar generieren, insbesondere bestehend aus Job-Session-Private-Key und Job-Session-Public-Key (wie beschrieben wurde).

Der Job-Session-Private-Key kann als 2D Barcode kodiert und als Bild auf dem Bildschirm der Scanvorrichtung angezeigt werden. Eine Scananwendung auf dem mobilen Nutzerendgerät kann die Schlüsseldaten unter Zuhilfenahme der Kamera in einen sicheren Speicher auf dem Nutzerendgerät kopieren.

### Phase 2: Verschlüsselung des Scanjobs und Übertragung zur Scanserveranordnung

Sobald der Schlüssel kopiert ist (es kann eine vorbeschriebene Bestätigung beispielsweise durch den Nutzer erfolgen), kann der Scanauftrag mit dem Job-Session-Public-Key verschlüsselt und zur Scanserveranordnung übertragen werden. Dort kann er so wie er ist, d.h. verschlüsselt mit dem Job-Session-Public-Key, abgespeichert werden.

### Phase 3: Übertragen des Job-Session-Private-Key

Der Nutzer bewegt sich von der Scanvorrichtung zu dem Arbeitsplatz bzw. zu der Computervorrichtung und kann mit der Scananwendung den Geräte-Session-Public-Key fotografieren. Mit diesem Schlüssel kann nun der Job-Session-Private-Key verschlüsselt und über die Scanserveranordnung bis zu dem Arbeitsplatz geschickt werden. Dort kann er mit Hilfe des Geräte-Session-Private-Key wieder entschlüsselt werden, so dass er nun für Entschlüsselungen von Scanaufträgen bereitsteht.

### Phase 4: Senden des Jobs und Entschlüsselung

Nun, da sich der private Schlüssel für die Entschlüsselung des Jobs auf dem Arbeitsplatz befindet, kann der Scanauftrag zum Gerät und dort mit genau diesem Schlüssel wieder entschlüsselt werden. Insbesondere kann hierfür eine vorbeschriebene Anforderungsnachricht und eine entsprechende Antwort gesendet werden.

Wie bereits beschrieben wurde, kann die Scanserveranordnung technisch auch auf dem Kopierer bzw. der Scanvorrichtung laufen. Das hat insbesondere den Vorteil, dass der Scan noch bis zum Abholen auf dem Kopierer verbleibt. Man braucht keinen zentralen Speicherplatz. Das resultierende Problem, woher die Computervorrichtung bzw. der Arbeitsplatz weiß, welchen Kopierer er anfragen muss (bei einem zentralen Server ist das einfach, ist ja nur der eine), kann beispielsweise mit einem Round-Robin-Poll gelöst werden (insbesondere wenn es nicht so viele Kopierer sind) oder mit einer Informationsserverkomponente, die diese Information (wo befindet sich welcher Job) verwaltet. Diese ist dann zwar auch ein Server, aber der muss weder sicherheitsrelevante Information pflegen noch große Datenmengen speichern.

Wenn der Scanauftrag per Mailserver übertragen wird, dann ist der Scan-Server bzw. die zweite Scanserverkomponente nur für den Schlüsseltransport notwendig. D.h. zusammengefasst, dass eine einzelne Scanserverkomponente für beide Rollen (Schlüsselbereitstellung vom Handy) und Dokumentenspeicherung/-transport oder eine erste Scanserverkomponente nur für die Rolle Dokumentenspeicherung/- transport (also insbesondere ein E-Mail-Server) und eine zweite Scanserverkomponente nur für eine Rolle (Schlüsselbereitstellung) verwendet werden können.

Kommt der Scanauftrag per E-Mail, kann die Applikation auf dem Arbeitsplatz selber das Postfach abfragen und nach geeigneten Anhängen suchen.

## Patentansprüche

1. Verfahren zum Betreiben eines Scansystems (400) mit mindestens einer Scanserveranordnung (206, 406) und mindestens einer mit der Scanserveranordnung (206, 406) kommunikativ verbindbaren Scanvorrichtung (308, 408), umfassend:
- Erhalten, durch die Scanserveranordnung (206, 406), eines mit einem öffentlichen Scanauftragsschlüssel eines Scanauftragsschlüsselpaares verschlüsselten Scanauftrags von einer mit der Scanserveranordnung (206, 406) kommunikativ verbindbaren Scanvorrichtung (308, 408),
- Erhalten, durch die Scanserveranordnung (206, 406), eines mit einem öffentlichen Computervorrichtungsschlüssel eines Computervorrichtungsschlüsselpaares verschlüsselten privaten Scanauftragsschlüssels des Scanauftragsschlüsselpaares von einem mobilen Nutzerendgerät (458),
- wobei das Computervorrichtungsschlüsselpaar einer Computervorrichtung (402) zugeordnet ist,
- Übertragen, durch die Scanserveranordnung (206, 406), des erhaltenen verschlüsselten privaten Scanauftragsschlüssels an die Computervorrichtung (308, 408), und
- Übertragen, durch die Scanserveranordnung (206, 406), des erhaltenen verschlüsselten Scanauftrags an die Computervorrichtung (402) zum Weiterverarbeiten des Scanauftrags durch die Computervorrichtung (402).

2. Verfahren nach Anspruch 1, **dadurch gekennzeichnet, dass**
- der private Computervorrichtungsschlüssel des Computervorrichtungsschlüsselpaares in einem Datenspeicher (452) der Computervorrichtung (402) gespeichert ist, wobei das Verfahren ferner umfasst:
- Entschlüsseln, durch die Computervorrichtung (402), des erhaltenen verschlüsselten privaten Scanauftragsschlüssels mit dem gespeicherten privaten Computervorrichtungsschlüssel des Computervorrichtungsschlüsselpaares, und
- Entschlüsseln, durch die Computervorrichtung (402), des erhaltenen verschlüsselten Scanauftrags mit dem entschlüsselten privaten Scanauftragsschlüssel.

3. Verfahren nach Anspruch 2, **dadurch gekennzeichnet, dass** das Verfahren umfasst:
- Bereitstellen, durch die Scanvorrichtung (308, 408), des Scanauftragsschlüsselpaares, insbesondere bei einer Erstellung des Scanauftrags,
- Verschlüsseln des Scanauftrags mit dem öffentlichen Scanauftragsschlüssel des bereitgestellten Scanauftragsschlüsselpaares,
- Bewirken, durch die Scanvorrichtung (402), eines Übertragens des verschlüsselten Scanauftrags an die Scanserveranordnung (206, 406), und
- Bereitstellen, durch die Scanvorrichtung (308, 408), des privaten Scanauftragsschlüssels des bereitgestellten Scanauftragsschlüsselpaares, derart, dass das mobile Nutzerendgerät (458) den privaten Scanauftragsschlüssel an der Scanvorrichtung (308, 408) erhalten kann.

4. Verfahren nach Anspruch 3, **dadurch gekennzeichnet, dass**
- das Bereitstellen, durch die Scanvorrichtung (308, 408), des privaten Scanauftragsschlüssels des bereitgestellten Scanauftragsschlüsselpaares ein Anzeigen eines optischen Scanauftragscodes durch eine optische Anzeige (445) der Scanvorrichtung (308, 408) umfasst,
- wobei der optische Scanauftragscode den privaten Scanauftragsschlüssel enthält.

5. Verfahren nach Anspruch 4, **dadurch gekennzeichnet, dass**
- der private Scanauftragsschlüssel des bereitgestellten Scanauftragsschlüsselpaares auf der Scanvorrichtung (402) nach einem Erhalt durch das mobile Nutzerendgerät (458) gelöscht wird.

6. Verfahren nach einem der vorherigen Ansprüche 3 bis 5, **dadurch gekennzeichnet, dass**
- das Bereitstellen des Scanauftragsschlüsselpaares ein Generieren eines neuen Scanauftragsschlüsselpaares für jeden erstellten Scanauftrag umfasst.

7. Verfahren nach einem der vorherigen Ansprüche, **dadurch gekennzeichnet, dass** das Verfahren umfasst:
- Bereitstellen, durch die Computervorrichtung (402), des öffentlichen Computervorrichtungsschlüssels eines bereitgestellten Computervorrichtungsschlüsselpaares, derart, dass das mobile Nutzerendgerät (458) den öffentlichen Computervorrichtungsschlüssels an der Computervorrichtung (402) erhalten kann, und
- Speichern des privaten Computervorrichtungsschlüssels des bereitgestellten Computervorrichtungsschlüsselpaares in einem Datenspeicher (452) der Computervorrichtung (402).

8. Verfahren nach Anspruch 7, **dadurch gekennzeichnet, dass**
- das Bereitstellen, durch die Computervorrichtung (402), des öffentlichen Computervorrichtungsschlüssels des bereitgestellten Computervorrichtungsschlüsselpaares ein Anzeigen eines optischen Computervorrichtungscodes umfasst,
- wobei der optische Computervorrichtungscode den öffentlichen Computervorrichtungsschlüssel enthält.

9. Verfahren nach einem der vorherigen Ansprüche, **dadurch gekennzeichnet, dass**
- das Erhalten, durch die Scanserveranordnung (206, 406), des verschlüsselten Scanauftrags ein Erhalten einer ersten Scankennung umfasst, und
- das Verfahren ferner ein Erhalten, durch die Scanserveranordnung (206, 406), einer weiteren Scankennung,
- wobei zumindest das Übertragen des erhaltenen verschlüsselten Scanauftrags an die Computervorrichtung (402) auf der ersten Scankennung und der weiteren Scankennung basiert.

10. Verfahren nach Anspruch 9, **dadurch gekennzeichnet, dass** das Verfahren umfasst:
- Speichern, durch die Scanserveranordnung (206, 406), des erhaltenen verschlüsselten Scanauftrags zusammen mit der erhaltenen ersten Scankennung in einem Datenspeicher (234, 434) der Scanserveranordnung (206, 406),
- wobei das Verfahren ferner insbesondere umfasst:
- Vergleichen, einer erhaltenen weiteren Scankennung mit der mindestens einen gespeicherten ersten Scankennung, und
- Übertragen, wenn in dem Vergleichsschritt eine Korrespondenz zwischen der erhaltenen weiteren Scankennung und einer gespeicherten ersten Scankennung bestimmt wird, zumindest des gespeicherten verschlüsselten Scanauftrags mit der zu der erhaltenen weiteren Scankennung korrespondierenden ersten Scankennung an die Computervorrichtung (402).

11. Scanserveranordnung (206, 406) für ein Scansystem (400), umfassend:
- mindestens ein Empfangsmodul (230), eingerichtet zum Erhalten eines mit einem öffentlichen Scanauftragsschlüssel eines Scanauftragsschlüsselpaares verschlüsselten Scanauftrags von einer Scanvorrichtung (308, 408),
- wobei das Empfangsmodul (230) eingerichtet ist zum Erhalten eines mit einem öffentlichen Computervorrichtungsschlüssel eines Computervorrichtungsschlüsselpaares verschlüsselten privaten Scanauftragsschlüssels des Scanauftragsschlüsselpaares von einem mobilen Nutzerendgerät (458),
- wobei das Computervorrichtungsschlüsselpaar einer Computervorrichtung (402) zugeordnet ist,
- mindestens ein Sendemodul (232, 432) eingerichtet zum Übertragen des erhaltenen verschlüsselten privaten Scanauftragsschlüssel an die Computervorrichtung (402), und
- wobei das Sendemodul (232, 432) eingerichtet ist zum Übertragen des erhaltenen verschlüsselten Scanauftrags an die Computervorrichtung (402) zum Weiterverarbeiten des Scanauftrags durch die Computervorrichtung (402).

12. Scanvorrichtung (308, 408) für ein Scansystem (400), umfassend:
- mindestens ein Scanmodul, eingerichtet zum Erhalten eines unverschlüsselte Scanauftrags,
- mindestens ein Bereitstellungsmodul (344, 444), eingerichtet zum Bereitstellen, eines Scanauftragsschlüsselpaares für den unverschlüsselten Scanauftrag
- mindestens ein Verschlüsselungsmodul (346, 446), eingerichtet zum Verschlüsseln des Scanauftrags mit dem öffentlichen Scanauftragsschlüssel des bereitgestellten Druckauftragsschlüsselpaares,
- mindestens ein Sendemodul (340, 440), eingerichtet Übertragen des verschlüsselten Scanauftrags an die Scanserveranordnung (206, 406), und
- wobei das Bereitstellungsmodul (344, 444) eingerichtet ist zum Bereitstellen des privaten Scanauftragsschlüssels des bereitgestellten Scanauftragsschlüsselpaares, derart, dass ein mobiles Nutzerendgerät (458) den privaten Scanauftragsschlüssel an der Scanvorrichtung (308, 408) erhalten kann.

13. Scansystem (400), umfassend:
- mindestens eine Scanserveranordnung (206, 406) nach Anspruch 11, und
- mindestens eine mit der Scanserveranordnung (206, 406) kommunikativ verbindbare Scanvorrichtung (308, 408), insbesondere eine Scanvorrichtung (308, 408) nach Anspruch 12.

## Claims

1. A method of operating a scanning system (400) comprising at least one scan server arrangement (206, 406) and at least one scanning device (308, 408) communicatively connectable to the scan server arrangement (206, 406), comprising:
- obtaining, by the scan server arrangement (206, 406), a scan job encrypted with a public scan job key of a scan job key pair from a scanning device (308, 408) communicatively connectable to the scan server arrangement (206, 406),
- obtaining, by the scan server arrangement (206, 406), a private scan job key of the scan job key pair encrypted with a public computer device key of a computer device key pair from a mobile user terminal (458),
- wherein the computer device key pair is associated with a computer device (402),
- transmitting, by the scan server arrangement (206, 406), the obtained encrypted private scan job key to the computer device (308, 408), and
- transmitting, by the scan server arrangement (206, 406), the received encrypted scan job to the computer device (402) for further processing of the scan job by the computer device (402).

2. Method according to claim 1, **characterized in that**
- the private computer device key of the computer device key pair is stored in a data memory (452) of the computer device (402), the method further comprising:
- decrypting, by the computer device (402), the obtained encrypted private scan job key with the stored private computer device key of the computer device key pair, and
- decrypting, by the computer device (402), the received encrypted scan job with the decrypted private scan job key.

3. Method according to claim 2, **characterized in that** the method comprises:
- providing, by the scanning device (308, 408), the scan job key pair, in particular upon a creation of the scan job,
- encrypting the scan job with the public scan job key of the provided scan job key pair,
- transmitting, by the scanning device (402), the encrypted scan job to the scan server arrangement (206, 406), and
- providing, by the scanning device (308, 408), the private scan job key of the provided scan job key pair such that the mobile user terminal (458) can obtain the private scan job key at the scanning device (308, 408).

4. Method according to claim 3, **characterized in that**
- providing, by the scanning device (308, 408), the private scan job key of the provided scan job key pair comprises displaying an optical scan job code by an optical display (445) of the scanning device (308, 408),
- wherein the optical scan job code contains the private scan job key.

5. Method according to claim 4, **characterized in that**
- the private scan job key of the provided scan job key pair on the scanning device (402) is deleted after a receipt by the mobile user terminal (458).

6. Method according to any one of the preceding claims, **characterized in that**
- providing the scan job key pair comprises generating a new scan job key pair for each created scan job.

7. Method according to any one of the preceding claims, **characterized in that** the method comprises:
- providing, by the computer device (402), the public computer device key of the provided computer device key pair such that the mobile user terminal (458) can obtain the public computer device key at the computer device (402), and
- storing the private computer device key of the provided computer device key pair in a data memory (452) of the computer device (402).

8. Method according to claim 7, **characterized in that**
- providing, by the computer device (402), the public computer device key of the provided computer device key pair comprises displaying an optical computer device code,
- wherein the optical computer device code contains the public computer device key.

9. Method according to any one of the preceding claims, **characterized in that**
- obtaining, by the scan server arrangement (206, 406), the encrypted scan request comprises obtaining a first scan identifier, and
- the method further comprises obtaining, by the scan server arrangement (206, 406), a further scan identifier,
- wherein at least transmitting the received encrypted scan job to the computer device (402) is based on the first scan identifier and the further scan identifier.

10. Method according to claim 9, **characterized in that** the method comprises:
- storing, by the scan server arrangement (206, 406), the received encrypted scan job together with the received first scan identifier in a data memory (234, 434) of the scan server arrangement (206, 406),
- wherein the method further comprises in particular:
- comparing a received further scan identifier with the at least one stored first scan identifier, and
- transmitting, when a correspondence between the received further scan identifier and a stored first scan identifier is determined in the comparing step, at least the stored encrypted scan job with the first scan identifier corresponding to the received further scan identifier to the computer device (402).

11. Scan server arrangement (206, 406) for a scanning system (400) comprising:
- at least one receiving module (230) configured to receive a scan job encrypted with a public scan job key of a scan job key pair from a scanning device (308, 408),
- wherein the receiving module (230) is configured to obtain a private scan job key of the scan job key pair encrypted with a public computer device key of a computer device key pair from a mobile user terminal (458),
- wherein the computer device key pair is associated with a computer device (402),
- at least one transmitting module (232, 432) is configured to transmit the received encrypted private scan job key to the computer device (402), and
- wherein the transmitting module (232, 432) is configured to transmit the received encrypted scan job to the computer device (402) for further processing of the scan job by the computer device (402).

12. Scanning device (308, 408) for a scanning system (400) comprising:
- at least one scanning module configured to receive an unencrypted scan job,
- at least one providing module (344, 444) configured to provide a scan job key pair for the unencrypted scan job
- at least one encryption module (346, 446) configured to encrypt the scan job with the public scan job key of the provided print job key pair,
- at least one transmitting module (340, 440), configured to transmit the encrypted scan job to the scan server arrangement (206, 406), and
- wherein the providing module (344, 444) is configured to provide the private scan job key of the provided scan job key pair such that the mobile user terminal (458) can obtain the private scan job key at the scanning device (308, 408).

13. Scanning system (400), comprising:
- at least one scan server arrangement (206, 406) according to claim 11, and
- at least one scanning device (308, 408) communicatively connectable to the scan server arrangement (206, 406), in particular a scanning device (308, 408) according to claim 12.

## Revendications

1. Procédé d'exploitation d'un système de balayage (400) avec au moins un dispositif de serveur de balayage (206, 406) et au moins un dispositif de balayage (308, 408) reliable de communicativement au dispositif de serveur de balayage (206, 406), comprenant:
- obtenir, par un arrangement de serveur de balayage (206, 406), un ordre de balayage chiffrée avec une clé publique d'ordre de balayage d'une paire de clés d'ordre de balayage, à partir d'un dispositif de balayage (308, 408) reliable communicativement à l'arrangement de serveur de balayage (206, 406),
- obtenir, par l'intermédiaire de l'arrangement de serveur de balayage (206, 406), d'une clé d'ordre de balayage privée de la paire de clés d'ordre de balayage, chiffrée avec une clé de dispositif informatique publique d'une paire de clés de dispositif informatique, à partir d'un terminal d'utilisateur mobile (458),
- où la paire de clés de dispositif informatique est associée à un dispositif informatique (402),
- transmettre, par l'arrangement de serveur de balayage (206, 406), la clé d'ordre de balayage privée chiffrée obtenue au dispositif informatique (308, 408), et
- transmettre, l'arrangement de serveur de balayage (206, 406), l'ordre de balayage chiffrée obtenue au dispositif informatique (402) pour un traitement ultérieur de l'ordre de balayage par le dispositif informatique (402).

2. Procédé selon la revendication 1, **caractérisé en ce que**
- la clé privée de dispositif informatique de la paire de clés de dispositif informatique est stockée dans une mémoire de données (452) du dispositif informatique (402), où le procédé comprend en outre:
- déchiffrer, par le dispositif informatique (402), la clé d'ordre de balayage privée chiffrée obtenue avec la clé de dispositif informatique privée stockée de la paire de clés de dispositif informatique, et
- déchiffrer, par le dispositif informatique (402), l'ordre de balayage chiffré obtenu avec la clé d'ordre de balayage privée déchiffrée.

3. Procédé selon la revendication 2, **caractérisé en ce que** le procédé comprend:
- fournir, par le dispositif de balayage (308, 408), la paire de clés de commande de balayage, en particulier lors d'une création de l'ordre de balayage,
- chiffrer l'ordre de balayage avec la clé publique d'ordre de balayage de la paire de clés d'ordre de balayage fournie,
- effectuer, par le dispositif de balayage (402), une transmission de l'ordre de balayage chiffré à l'arrangement de serveur de balayage (206, 406), et
- fournir, par le dispositif de balayage (308, 408), la clé privée d'ordre de balayage de la paire de clés d'ordre de balayage fourni, de sorte que le terminal utilisateur mobile (458) peut obtenir la clé privée d'ordre de balayage au dispositif de balayage (308, 408).

4. Procédé selon la revendication 3, **caractérisé en ce que**
- fournir, par le dispositif de balayage (308, 408), de la clé privée d'ordre de balayage de la paire de clés d'ordre de balayage fourni comprend un affichage d'un code optique d'ordre de balayage par un affichage optique (445) du dispositif de balayage (308, 408),
- où le code optique d'ordre de balayage contient la clé privée d'ordre de balayage.

5. Procédé selon la revendication 4, **caractérisé en ce que**
- la clé d'ordre de balayage privée de la paire de clés d'ordre de balayage fourni est effacée sur le dispositif de balayage (402) après avoir été reçue par le terminal d'utilisateur mobile (458).

6. Procédé selon l'une des revendications 3 à 5 précédentes, **caractérisé en ce que**
- fournir la paire de clés d'ordre de balayage comprend une génération d'une nouvelle paire de clés d'ordre de balayage pour chaque ordre de balayage créé.

7. Procédé selon l'une des revendications précédentes, **caractérisé en ce que** le procédé comprend:
- fournir, par le dispositif informatique (402), la clé publique de dispositif informatique d'une paire de clés de dispositif informatique fournie, de telle sorte que le terminal mobile utilisateur (458) peur obtenir la clé publique de dispositif informatique au dispositif informatique (402), et
- stocker la clé privée de dispositif informatique de la paire de clés de dispositif informatique fournie dans une mémoire de données (452) du dispositif informatique (402).

8. Procédé selon la revendication 7, **caractérisé en ce que**
- fournir, par le dispositif informatique (402), la clé de dispositif informatique publique de la paire de clés de dispositif informatique fournie comprend l'affichage d'un code de dispositif informatique optique,
- où le code optique de dispositif informatique contient la clé publique de dispositif informatique.

9. Procédé selon l'une des revendications précédentes, **caractérisé en ce que**
- obtenir, par le dispositif de serveur de balayage (206, 406), de l'ordre de balayage chiffrée comprend une obtention d'un premier identifiant de balayage, et
- le procédé comprend en outre l'obtention, par le dispositif de serveur de balayage (206, 406), une autre identification de balayage,
- où au moins la transmission de l'ordre de numérisation chiffrée obtenu au dispositif informatique (402) est basé sur la première identification de balayage et l'autre identification de balayage.

10. Procédé selon la revendication 9, **caractérisé en ce que** le procédé comprend :
- stocker, par le dispositif serveur de balayage (206, 406), de l'ordre de balayage chiffrée obtenu avec le premier identifiant de balayage obtenu, dans une mémoire de données (234, 434) du dispositif serveur de balayage (206, 406),
- le procédé comprenant en outre en particulier :
- comparer une autre identification de balayage obtenue avec la au moins une première identification de balayage stockée, et
- transmettre, si une correspondance entre l'autre identification de balayage obtenue et une première identification de balayage stockée est déterminée dans l'étape de comparaison, au moins l'ordre de balayage chiffré stocké avec la première identification de balayage correspondant à l'autre identification de balayage obtenue au dispositif informatique (402).

11. Arrangement de serveur de balayage (206, 406) pour un système de balayage (400), comprenant:
- au moins un module de réception (230) configuré pour recevoir d'un dispositif de balayage (308, 408) un ordre de balayage chiffrée avec une clé publique d'ordre de balayage d'une paire de clés d'ordre de balayage,
- où le module de réception (230) est configuré pour recevoir d'un terminal d'utilisateur mobile (458) une clé d'ordre de balayage privée de la paire de clés d'ordre de balayage chiffrée avec une clé de dispositif informatique publique d'une paire de clés de dispositif informatique,
- où la paire de clés de dispositif informatique est associée à un dispositif informatique (402),
- au moins un module de transmission (232, 432) configuré pour transmettre la clé d'ordre de balayage privée chiffrée reçue au dispositif informatique (402), et
- où le module de transmission (232, 432) est configuré pour transmettre l'ordre de balayage chiffré reçu au dispositif informatique (402) pour un traitement ultérieur de l'ordre de balayage par le dispositif informatique (402).

12. Dispositif de balayage (308, 408) pour un système de balayage (400), comprenant:
- au moins un module de balayage adapté pour recevoir un ordre de balayage non chiffré,
- au moins un module de fourniture (344, 444) configuré pour fournir une paire de clés d'ordre de balayage pour l'ordre de balayage non chiffrée,
- au moins un module de chiffrage (346, 446), configuré pour chiffrer l'ordre de balayage avec la clé publique d'ordre de balayage de la paire de clés d'ordre d'impression fournie,
- au moins un module de transmission (340, 440), configuré pour transmettre l'ordre de balayage chiffrée à l'arrangement de serveur de balayage (206, 406), et
- où le module de fourniture (344, 444) est configuré pour fournir la clé d'ordre de balayage privé de la paire de clés d'ordre de balayage fourni, de telle sorte qu'un terminal d'utilisateur mobile (458) peur obtenir la clé d'ordre de balayage privée au dispositif de balayage (308, 408).

13. Système de balayage (400) comprenant:
- au moins un arrangement de serveur de balayage (206, 406) selon la revendication 11, et
- au moins un dispositif de balayage (308, 408) reliable de communicativement a l'arrangement de serveur de balayage (206, 406), en particulier un dispositif de balayage (308, 408) selon la revendication 12.
